# EUROPEAN PATENT SPECIFICATION

(11) **EP 3 948 533 B1**
(45) Date of publication and mention of the grant of the patent: **16.09.2026**
(21) Application number: 20720985.9
(22) Date of filing: 26.03.2020
(51) Int. Cl.: G06F 9/455, G06F 9/48, G06Q 10/06, G06Q 30/02, G06Q 30/0207, G06Q 30/04, G06Q 30/06, G06Q 10/10

(54) **CONTINUATION WORKFLOWS**
FORTFÜHRUNGSARBEITSABLÄUFE
FLUX DE TRAVAUX DE CONTINUATION

(30) Priority: 27.03.2019 US 201916366976; 27.03.2019 US 201916366998; 27.03.2019 US 201916366795
(43) Date of publication of application: 09.02.2022
(60) Divisional application: 26195561.1
(73) Proprietor: Amazon Technologies, Inc., Seattle, WA 98108-1226 (US)
(72) Inventor: LIGUORI, Anthony Nicholas, Seattle, Washington 98109 (US); LAURENCE, Douglas Stewart, Seattle, Washington 98109 (US)
(74) Representative: Murgitroyd & Company
(86) International application number: PCT/US2020/025079
(87) International publication number: WO 2020/198539

(56) References cited:
- US-A- 5 987 422
- US-B1- 9 098 329
- US-B1- 9 645 847

## Description

### CROSS REFERENCE TO RELATED APPLICATIONS

This application claims priority of U.S. Patent Application No. 16/366,976 filed on March 27, 2019, and entitled " CONTINUATION WORKFLOWS," U.S. Patent Application No. 16/366,795, filed March 27, 2019, and entitled "REDUCING REQUEST LATENCY IN A MULTI-TENANT WEB SERVICE HOST," and U.S. Patent Application No. 16/366,998, filed March 27, 2019, and entitled "CHAINING VIRTUAL MACHINES"

### BACKGROUND

In various contexts, managing the efficiency and performance of various applications is of utmost importance in many computing services. Computing services often utilize networks of various functions and operations to perform workflows that various applications can require. These functions and operations can often utilize the instantiation of computational systems to perform the workflows various applications require. Additionally, the workflows can require the usage of other services to complete the workflows. The access of such services can result in an idling of the computational systems instantiated to perform the workflows as the services operate to provide responses to the computational systems. This idling can result in an inefficient usage of the computational resources of the computational systems, which must operate while waiting for responses from the services.

### BRIEF DESCRIPTION OF THE DRAWINGS

Various techniques will be described with reference to the drawings, in which:
FIG. 1 illustrates an example of a continuation workflow in accordance with an embodiment;
FIG. 2 is a swim diagram that illustrates an example of a continuation workflow in accordance with an embodiment;
FIG. 3 is a flowchart that illustrates an example of a continuation workflow in accordance with an embodiment;
FIG. 4 illustrates an example of chaining virtual machines in accordance with an embodiment;
FIG. 5 illustrates an example of fanning out virtual machines in accordance with an embodiment;
FIG. 6 illustrates an example of fanning out virtual machines in accordance with another embodiment;
FIG. 7 is a swim diagram that illustrates an example of chaining virtual machines in accordance with an embodiment;
FIG. 8 is a flowchart that illustrates an example of chaining virtual machines in accordance with an embodiment; and
FIG. 9 illustrates a system in which various embodiments can be implemented.
FIG. 10 illustrates an example of a storage service using virtual machines to isolate concurrent requests in accordance with an embodiment;
FIG. 11 illustrates an example of virtual machine configurations derived from a base virtual machine in accordance with an embodiment;
FIG. 12 illustrates an example of running cloned virtual machines on a host machine in accordance with an embodiment;
FIG. 13 illustrates an example of an interface for providing customer code in accordance with an embodiment;
FIG. 14 is a flowchart that illustrates an example of creating and distributing particular virtual machine configurations in accordance with an embodiment;
FIG. 15 is a flowchart that illustrates an example of a process for executing customer code within a data storage service in accordance with an embodiment;
FIG. 16 is a swim diagram that illustrates an example of a process for executing software code in accordance with an embodiment.

### DETAILED DESCRIPTION

Techniques and systems described below relate to event driven suspend and resume virtual machine configurations that perform a workflow over a series of stages. In one example, a workflow request to perform a workflow is received via an application programming interface. In the example, a first virtual machine instance is caused to execute function code to perform a first portion of the workflow. Performance of the first portion of the workflow, in this example, includes storing a first state of execution of the function code as a first snapshot (e.g., in persistent storage, random access memory (RAM), etc.), receiving a first invoke handle corresponding to the first snapshot, submitting, to a first service, a first service request for first information associated with the workflow, wherein the first service request includes the first invoke handle, and terminating the first virtual machine instance.

In some examples, the term "virtual machine instance" refers to a virtual machine that is instantiated and executing on a host computer system. The virtual machine instances may be used for various purposes, such as to operate as servers supporting a website, to operate business applications or, generally, to serve as compute power for the customer. Other applications for the virtual machine instances may be to support database applications, electronic commerce applications, business applications, and/or other applications.

Still in the example, the first invoke handle and the first information is received from the first service via the application programming interface. Then, in the example, a second virtual machine instance is caused to resume execution of the function code from the first state of execution using the first invoke handle and the first information to perform a second portion of the workflow. Performance of the second portion of the workflow, in this example, includes storing a second state of execution of the function code as a second snapshot (e.g., in the persistent storage, RAM, etc.), receiving a second invoke handle corresponding to the second snapshot, submitting, to a second service, a second service request for second information associated with the workflow, wherein the second service request includes the second invoke handle, and terminating the second virtual machine instance.

Further in the example, the second invoke handle and the second information is received from the second service via the application programming interface. A third virtual machine instance is caused to resume execution of the function code from the second state of execution using the second invoke handle and the second information to perform a third portion of the workflow. Performance of the third portion of the workflow, in this example, includes determining a workflow result based on the first information and the second information, returning the workflow result, and terminating the third virtual machine instance. Finally, in the example, the workflow result is provided in response to the workflow request.

In another example, function code is received that, as a result of being executed by a virtual machine configuration, causes the virtual machine configuration to at least perform at least a portion of a workflow to produce information, generate a snapshot corresponding to a current state of the virtual machine configuration, return the information and an invoke handle to the snapshot, and terminate the virtual machine configuration. A request to perform the workflow is received via an application programming interface.

In the example, the request is fulfilled by at least causing a first virtual machine configuration to be instantiated to execute the function code to perform a first portion of the workflow. Further in fulfillment of the request, first information and the handle is received from the first virtual machine configuration. Still further in fulfillment of the request, a first operation based on the first information is performed. Also in fulfillment of the request, a second virtual machine configuration is caused to be instantiated based on the invoke handle to execute the function code to perform a second portion of the workflow.

Further in fulfillment of the request, second information from the second virtual machine configuration is received. Still further in fulfillment of the request, a second operation is performed based on the second information. Also in fulfillment of the request, a workflow result is determined based on performance of the first operation and the second operation. Finally, the workflow result is provided in response to the request.

In the preceding and following description, various techniques are described. For purposes of explanation, specific configurations and details are set forth in order to provide a thorough understanding of possible ways of implementing the techniques. However, it will also be apparent that the techniques described below may be practiced in different configurations without the specific details. Furthermore, well-known features may be omitted or simplified to avoid obscuring the techniques being described.

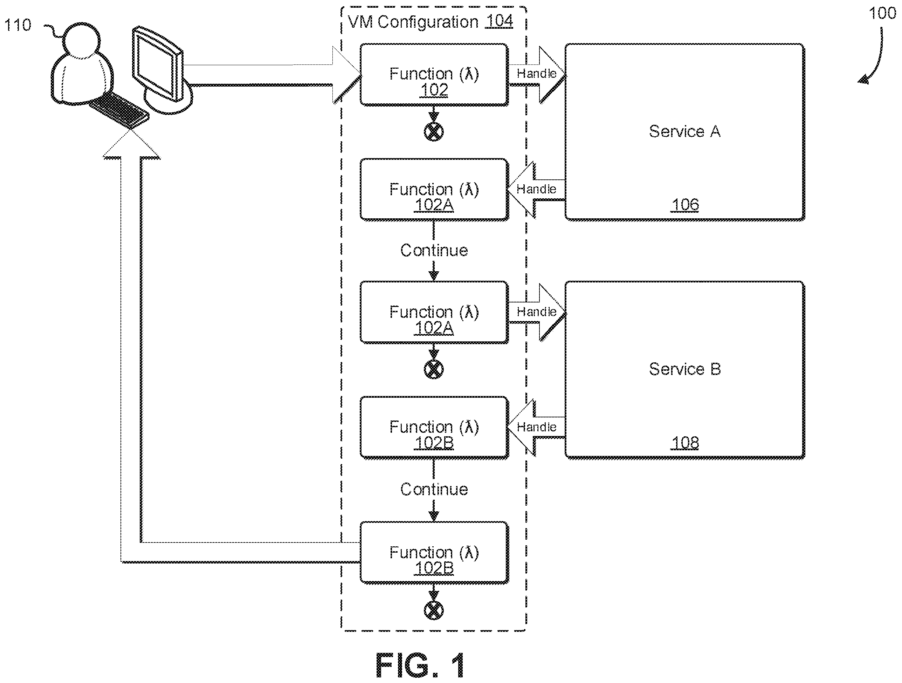

FIG. 1 illustrates an example of a continuation workflow in accordance with an embodiment. Specifically, FIG. 1 depicts an example 100 of a system in which a customer 110 causes a virtual machine (VM) configuration 104 hosted by a computing resource service provider to perform a workflow that utilizes continuations in a manner described in the present disclosure. In some examples, a computing resource service provider is an entity that provides one or more computing resource services to its customers individually or as a combination of services of a distributed computer system. Examples of types of computing resources provided by the computing resource service providers include infrastructure-as-a-service (IaaS), platform-as-a-service (PaaS), and/or software-as-a-service (SaaS). The one or more computing resource services of the computing resource service provider may be accessible to users via a network and may include services such as virtual computer system services, block-level data storage services, cryptography services, on-demand data storage services, notification services, authentication services, policy management services, task services and/or other such services. Not all embodiments described include all of the services described, and additional services may be provided in addition to, or as an alternative to, services explicitly described.

In some examples, an on-demand data storage service is a collection of computing resources configured to synchronously process requests to store and/or access data. The on-demand data storage service may allow data to be provided in response to requests for the data and may operate using computing resources (e.g., databases) that enable the on-demand data storage service to locate and retrieve data quickly. For example, the on-demand data storage service may maintain stored data in a manner such that, when a request for a data object is retrieved, the data object can be provided (or streaming of the data object can be initiated) in a response to the request. As noted, data stored in the on-demand data storage service may be organized into data objects. The data objects may have arbitrary sizes except, perhaps, for certain constraints on size. Thus, the on-demand data storage service may store numerous data objects of varying sizes. The on-demand data storage service may operate as a key value store that associates data objects with identifiers of the data objects which may be used by the customer to retrieve or perform other operations in connection with the data objects stored by the on-demand data storage service.

Customers of the computing resource service provider, such as the customer 110, may communicate with one or more of the services via an interface, which may be a web services interface or any other type of customer interface. Each service provided by a computing resource service provider may have its own interface, and subsets of the services may have corresponding individual interfaces in addition to, or as an alternative to, a common interface. The customer 110 may communicate with the computing resource service provider through a network, whereby the network may be a communication network, such as the Internet, an intranet, an internet service provider (ISP) network and/or some other such network as described below.

In an embodiment, the customer 110 is any entity operable to access systems such as the VM configuration 104. In some examples, the customer 110 is an individual, group of individuals, business entity or other organization that has a business relationship with the computing resource service provider. In the present disclosure, it is contemplated that use of the term "customer" can include a computing device (also referred to as a "client device") used to perform operations under the control of or on behalf of the customer (e.g., to access a service provided by the computing resource service provider). Examples of such a computing device include one or more instances of a physical computing instance (e.g., a physical server computer, a mobile communication device, a laptop computer, a tablet computer, a personal computer, a mainframe, etc.) or one or more instances of a virtual computing instance, such as a customer-accessible virtual machine hosted on one or more computer servers, or other computing system capable of communicating with a service provided by the computing resource service provider. In some examples, a "service" refers to an executing computer application that provides functionality to another computer application.

In some examples, a virtual machine configuration refers to a virtual machine that has been configured to support one or more operations it is expected to perform. The virtual machine configuration may be instantiated from a snapshot of a virtual machine stored at a state of execution whereby a particular set of executable software instructions is launched to the point of being ready/able to accept and/or execute function code to perform a workflow as described in the present disclosure. In some examples, a "snapshot" refers to a serialized representation (e.g., a copy) of a state of a computer system (physical or virtual) or a copy of a state of execution of a computer program stored in volatile or nonvolatile storage (e.g., RAM, persistent storage, etc.). In the present disclosure, serialization can refer to the process of transforming computer data into a format that can be stored (e.g., in a file or in memory) or transmitted and can be reconstructed to produce another instance of the original data. Thus, the serialized representation of the state of the computer system (virtual or non-virtual) may be a result of transformation of that state into a data format (e.g., binary, text, etc.) that is usable to recreate or reproduce the state of the computer system from the point at which it was serialized.

In some examples, the term "virtual machine" refers to an emulation, in software and/or hardware of a physical computer system, such that software executing in the virtual machine environment behaves as if the virtual machine were a physical computer. The virtual machine may include various virtual computer components, such as one or more virtual processors, virtual memory, or other virtual devices. The virtual processors, virtual memory, and/or other virtual device(s) may emulate a physical analogue while utilizing a share of one or more of the host computing device's physical processors, memory, or other devices to perform respective virtual functions. The virtual machines may be provided to customers of the computing resource service provider via a virtual computer system service, and the customers may run operating systems, applications and/or other such computer system entities on the virtual host.

The customer 110 may communicate to the VM configuration 104 through one or more communication networks, such as the Internet. Further, the various communications to/from the customer 110 may be orchestrated by a browser or other application executing on the customer 110. In an embodiment, the customer 110 communicates to the VM configuration 104 through one or more application programming interfaces (API). In some examples, an application programming interface may be a set of subroutine definitions, communication protocols, and/or software tools that provide a method of communication from the customer 110 and the VM configuration 104. Additionally, in some examples, the VM configuration 104 may communicate to the services A 106 and B 108 through the usage of one or more APIs.

In an embodiment, the VM configuration 104 is under the control of a service such as a serverless compute service provided by the computing resource service provider to its customers to perform various functions on behalf of the customers. Examples of serverless compute services include AWS Lambda, Google Cloud Functions, IBM Cloud Functions, Fn or Fn Project, platform-as-a-service service providers, and more. A serverless compute service may be serverless in the sense that computing resources are dynamically allocated to perform functions (also referred to as serverless compute functions, serverless functions, Lambda functions) triggered by the events such as invocation of an endpoint from a client (e.g., a web API call via a network such as the Internet). In an embodiment, a serverless compute function is triggered when a serverless compute endpoint is invoked and computing resources in which the function can run are provisioned in response to the trigger being detected. Note, however, that embodiments of the present disclosure need not be limited to use with serverless compute services, but may also be implemented on some other virtual computing service platform, such as a software container service or virtual computer system service. The computing resources utilized may be in accordance with a computing environment that is suitable to execute the function. The computing resources can be physical, which may include physical server computers, or virtual, which may include virtual machines. For example, if the function being triggered is written in the Java programming language, the serverless compute service may allocate a Java Virtual Machine as the resource to run the coded function.

In an embodiment, the customer 110 invokes the function 102 via an API call to perform a specified workflow. The function 102 may comprise one or more operations; these operations may require the usage of various services, such as the service A 106. In an embodiment, the function 102 comprises the performance of one or more operations, and a storage of the state of the function 102 following the performance of the one or more operations.

In various embodiments, the state of the function 102 (and other states described in the present disclosure) may be stored with a storage service, such as on-demand data storage service, a block storage service, archive data storage service, database, or other storage on persistent (non-volatile) storage or non-persistent (volatile) storage. Examples of persistent storage media include one or more of magnetic media (e.g., hard disk drive, a floppy disk drive along with associated removable media), optical media (e.g., compact disc (CD), a digital versatile disc (DVD), Blu-ray disc, etc.), flash memory (e.g., solid-state drive, etc.), holographic data storage, and other like storage media. Examples of non-persistent storage media include static and dynamic random access memory.

The function 102 may require additional operations to perform the specified workflow; the service A 106 may comprise one or more of the additional operations. Rather than remaining idle while waiting for a response from service A 106, the function 102 stores its state (e.g., in memory or persistent storage) and terminates after calling the service A 106 (e.g., making a request for the service A 106 to perform its one or more of the additional operations) and providing the service A with an invoke handle to a stored state of the function 102 such that the service A, upon completion of its task, can re-invoke the function 102 using the invoke handle. In the present disclosure, the request for the service A 106 to perform its one or more additional operations may be referred to as an "operation request." In embodiments, the operation request is an asynchronous operation request in that the request is for another entity (e.g., the service 106, the customer 110, etc.) to perform one or more operations that are time-consuming enough that there is value (e.g., in terms of cost to the computing resource service provider or customer of the computing resource service provider) for the function/virtual machine to free up its allocated real or virtual resources until the entity completes performance of the one or more operations. In some examples, the stored state may be stored in persistent storage, accessible through one or more data storage services and/or systems via an invoke handle. In an embodiment, an invoke handle is a data object that comprises a reference to a resource, such as a snapshot and/or variations thereof. In some examples, an invoke handle may be a uniform resource identifier (URI) that utilizes the uniform resource name (URN) format.

In an embodiment, the invoke handle may be passed to the service A 106 from the function 102 through the usage of one or more communication networks, and may utilize an API to facilitate the communications. The service A 106 may perform one or more operations as part of the specified workflow. In some examples, the service A 106 may perform one of one or more services including data processing, data storage, applications, interfaces, permissions, security policies, encryption and/or other such services. In an embodiment, the function 102 is suspended while the service A 106 performs the one or more operations. In some examples, the function 102 may be suspended by storage of the function 102 state and subsequent termination of the virtual machine instance the function 102 was executing on.

In an embodiment, the stored state may be invoked by the usage of an invoke handle by the service A 106. For example, following the performance of the one or more operations, the service A 106 may pass the various results of the one or more operations the service A 106 performs to the function 102, which may have been suspended. In an embodiment, the function 102 is re-instantiated, or awakened, by the service A 106 making a call (e.g., API call) to a serverless compute service or other service that executes the function using the invoke handle to the stored state of the function 102 in order to instantiate the function 102A. In addition to the invoke handle, the service A 106 may pass various results of its one or more operations to the function 102A. In this manner, the re-instantiated function 102A may utilize various results of the one or more operations the service A 106 comprises, to perform one or more functions and/or operations as part of the specified workflow. Additionally, in some embodiments, the instantiation of the function 102A may comprise the instantiation of another virtual machine instance to perform one or more functions the function 102A may comprise. In other embodiments, the stored state may include a snapshot of the virtual machine instance that was executing the function 102 at the time the state was stored, such that upon invocation of the invoke handle, the virtual machine instance is revived as well. Note, however, that the virtual machine may be revived to execute on a different physical computing device (also referred to as a "host") from the physical computing device that was executing the virtual machine prior to the snapshot.

The function 102A may comprise one or more operations; as noted above, these operations may require the usage of various services, which may include as the service B 108 in addition to service A 106. As also noted above, in an embodiment, the function 102A comprises the performance of one or more operations, and a storage of a second state of the function 102A following the performance of the one or more operations. The second stored state, which in some examples can be referred to as a continuation, may require additional operations to perform the specified workflow, and the service B 108 may comprise one or more of the additional operations. For example, rather than remaining idle while waiting for a response from service B 108, the function 102A may store its state (e.g., in memory or persistent storage) and terminate after calling the service B 108 (e.g., making a request for the service B 108 to perform its one or more of the additional operations). As similar to above, in the present disclosure, the request for the service B 108 to perform its one or more additional operations may be referred to as an "operation request." In embodiments, the operation request is an asynchronous operation request in that the request is for another entity (e.g., the service B 108, the customer 110, etc.) to perform one or more operations that are time-consuming enough that there is value (e.g., in terms of cost to the computing resource service provider or customer of the computing resource service provider) for the function/virtual machine to free up its allocated real or virtual resources until the entity completes performance of the one or more operations. As explained above, in some examples, the second stored state may be stored in persistent storage, accessible through one or more data storage services and/or systems via an invoke handle. In embodiments, the invoke handle to the second stored state may be different from the invoke handle to the previous stored state. In other embodiments, the second stored state may overwrite the previous stored state, and in such embodiments the invoke handle to the second stored state may be the same as the previous invoke handle. In other embodiments, the invoke handle to the stored state of the function 102A is the same as the invoke handle to the stored state of the function 102, such that usage of the invoke handle causes the most-recently stored state of the function to be invoked.

In an embodiment, the invoke handle may be passed to the service B 108 from the function 102A through the usage of one or more communication networks, and may utilize an API to facilitate the communications. The service B 108 may perform one or more operations as part of the specified workflow. In some examples, the service B 108 may one of one or more services including data processing, data storage, applications, interfaces, permissions, security policies, encryption and/or other such services. In an embodiment, the function 102A is suspended while the service B 108 performs the one or more operations. In some examples, the function 102A may be suspended by a termination of the virtual machine instance upon which the function 102A was executing.

In an embodiment, the stored state may be accessed by the usage of an invoke handle. For example, following the performance of the one or more operations, the service B 108 may pass the various results of the one or more operations the service B 108 comprises to the function 102A, which may have been suspended. In an embodiment, the function 102A is re-instantiated, or awakened, by the service 108 B making a call (e.g., API call) to a serverless compute service or other service that executes the function using the invoke handle to the stored state of the function 102A in order to instantiate the function 102B. In addition to the invoke handle, the service B 108 may pass various results of its one or more operations to the function 102B. In this manner, the re-instantiated function 102B may utilize various results of the one or more operations the service B 108 comprises, to perform one or more functions and/or operations to complete the specified workflow. Additionally, in some embodiments, the instantiation of the function 102B may comprise the instantiation of a virtual machine instance to perform one or more functions the function 102B may comprise. In other embodiments, the stored state may include the virtual machine instance that was executing the function 102 at the time the state was stored, such that upon invocation of the invoke handle, the virtual machine instance is revived as well. In an embodiment, the function 102B completes the specified workflow and returns the one or more results of the specified workflow to the customer 110; following the completion of the function 102B, the virtual machine instance instantiated to perform the one or more functions the function 102B may comprise may be terminated (e.g., by exiting and relinquishing any allocated resources). Note that although FIG. 1 depicts two services, service A 106 and service B 108, it is contemplated that the techniques described above may involve only a single service or many services beyond two.

One example use case of a system depicted in FIG. 1 may be that of an online ordering system. The customer 110 may place an order for a product or service via the function 102. In order to proceed to the next stage in the workflow, the function 102 may need tax information (e.g., sales tax) about the order and may need to make a call to a tax service (e.g., the service A 106) for that information. Rather than waiting idly for the tax service to return with the tax information, the function 102 may store a saved state of itself (first saved state) and make a call to the tax service, while including an invoke handle (first invoke handle) to the first saved state. The function 102, and its host virtual machine instance may then terminate. Once the tax service determines the tax information, it may re-invoke the function (e.g., function 102A) using the first invoke handle and pass the tax information to the function 102A. In the use case, the function 102A may continue performing its workflow until it needs to make a call to a discount service (e.g., the service B 108) to find out whether the customer 110 qualifies for any discounts on the order. As with the tax service, rather than waiting idly for the discount service to return with the discount information, the function 102A may store another saved state of itself (second saved state) and make a call to the discount service, while including an invoke handle (second invoke handle) to the second saved state. The function 102A, and its host virtual machine instance may then terminate again. Once the discount service determines the discount information, it may re-invoke the function (e.g., function 102B) using the second invoke handle and pass the discount information to the function 102B. In the use case, the function 102B may continue the workflow (e.g., providing the final price of the order, taking payment from the customer, emailing the customer with order details, etc.) to complete the order for the customer 110, and terminate upon completion.

Note that although the example 100 depicts two services, the service A 106 and the service B 108, it is contemplated that techniques described in the present disclosure may be applied to any number of services as needed to complete the workflow. Similarly, the techniques described in the present disclosure can be applied to only a single service, such as, for example, an embodiment where service A 106 is called repeatedly by the function, which stores its state to resume from the stored state when service A 106 responds with the invoke handle and its response. Additionally or alternatively, rather than awaiting a response from a service, the function may be waiting for a response from a user, such as the customer 110. For example, the function 102 may pass the invoke handle to its stored state to a user interface of the customer 110 and terminate while it waits for the customer 110 to submit a response. Along with submission of the customer's response via the user interface, the user interface may call the invoke handle to the stored state of the function 102A to allow it to continue performing the workflow with the customer's information. In this manner, the resources allocated to the function 102 are freed for use by other uses while the function 102 would otherwise be waiting idle for the customer input.

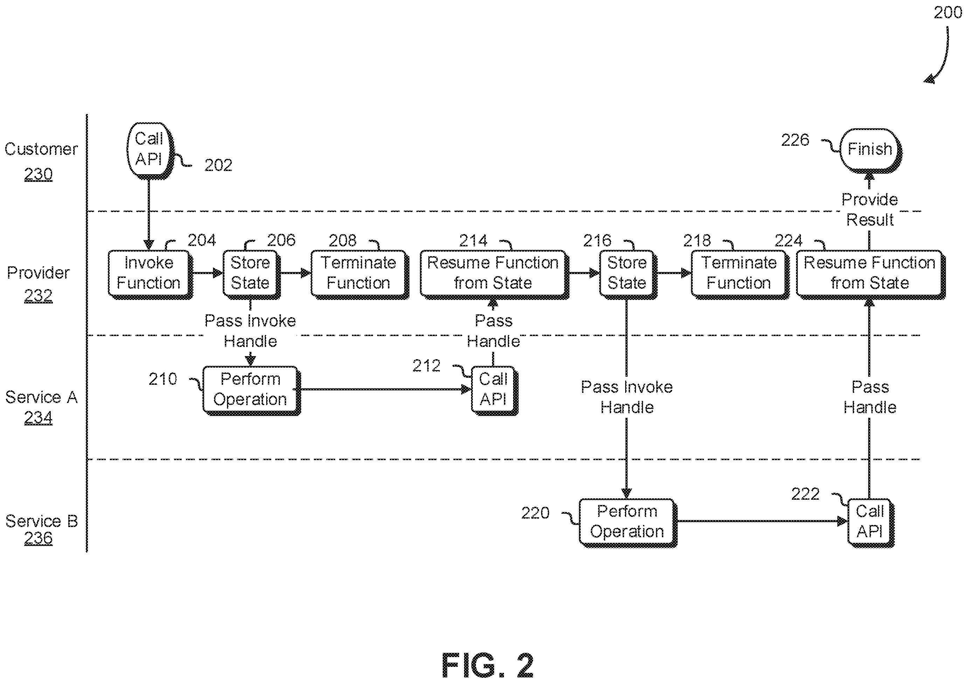

FIG. 2 is a swim diagram illustrating an example of a process 200 for a continuation workflow in accordance with various embodiments. Some or all of the process 200 (or any other processes described, or variations and/or combinations of those processes) may be performed under the control of one or more computer systems configured with executable instructions and/or other data, and may be implemented as executable instructions executing collectively on one or more processors. The executable instructions and/or other data may be stored on a non-transitory computer-readable storage medium (e.g., a computer program persistently stored on magnetic, optical, or flash media).

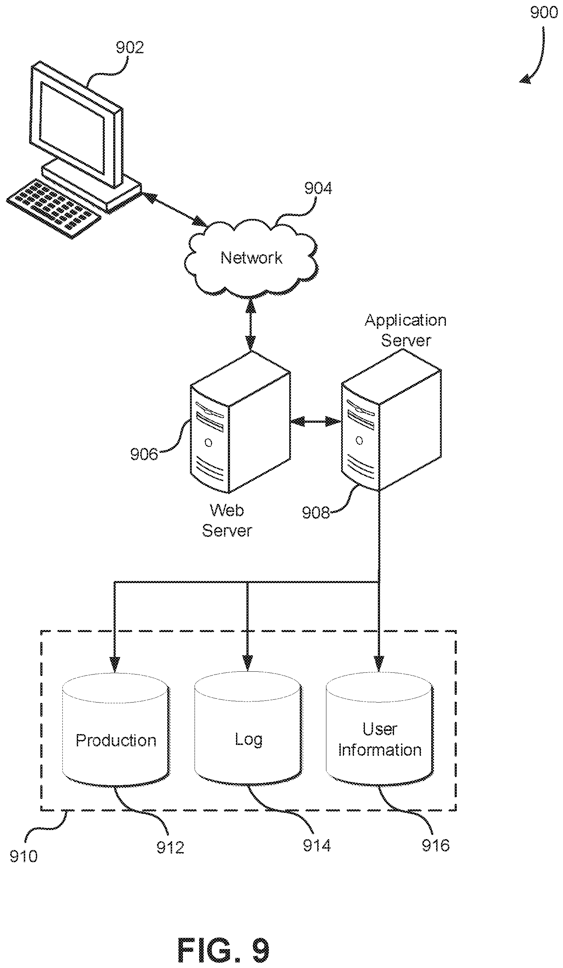

For example, some or all of process 200 may be performed by any suitable system, such as a server in a data center, by various components of the system 900 described in conjunction with FIG. 9, such as the web server 906 or the application server 908, by multiple computing devices in a distributed system of a computing resource service provider, or by any electronic client device such as the electronic client device 902. The process 200 includes a series of operations wherein the system performing the process 200 utilizes a continuation workflow to execute a specified workflow.

In an embodiment, the customer 230 invokes 204 a function via an API call 202 to a virtual computing service provided by a computing resource service provider (e.g., a serverless compute service, a software container service, or virtual computer system service, etc.) to perform the specified workflow. The function may comprise one or more operations; these operations may require the usage of various services, such as the service A 234. In an embodiment, the function comprises the performance of one or more operations, and a storage 206 of the state of the function following the performance of the one or more operations. The stored state, which in some examples can be referred to as a continuation, may require additional operations to perform the specified workflow; the service A 234 may comprise one or more of the additional operations. In some examples, the stored state may be stored in persistent storage, accessible through one or more data storage services and/or systems via an invoke handle.

In an embodiment, the stored state may be accessed by the usage of an invoke handle. The invoke handle may be passed to the service A 234 from the function through the usage of one or more communication networks via an API to facilitate the communications between the provider 232 and the service A 234. The service A 234 may perform 210 one or more operations as part of the specified workflow. In some examples, the service A 234 may perform one of one or more services including data processing, data storage, applications, interfaces, permissions, security policies, encryption and/or other such services. In an embodiment, the function is terminated 208 while the service A 234 performs the one or more operations. In some examples, the function may be terminated 208 by a termination (e.g., by exiting and relinquishing any allocated resources) of the virtual machine instance on which the function was executing.

Following the performance 210 of the one or more operations, the service A 234 may pass 212 the invoke handle as well as various results of the one or more operations the service A 234 performed in order to resume the function that was previously terminated 208. The service A 234 may utilize an API call from one or more APIs through one or more communication networks to facilitate the communication of the results and usage of the invoke handle and the various results between the provider 232 and the service A 234. In an embodiment, the function is resumed 214 from the state by utilizing the invoke handle to obtain access to the stored state of the function, passed by the service A 234. The resumed function may utilize various results of the one or more operations the service A 234 performed and perform one or more functions and/or operations as part of the specified workflow.

Additionally, the resuming 214 of the function may comprise the instantiation of a second virtual machine instance different from the first virtual machine instance to perform the one or more functions of the function. The different virtual machine instances may further execute on different physical computing devices ("hosts"). In this manner, a virtual computer system service that provides the virtual machines to customers may use any available physical hosts to efficiently host the functions at different stages of the workflow.

The resumed function may comprise one or more operations; these operations may require the usage of various services, such as the service B 236. In an embodiment, the resumed function comprises the performance of one or more operations, and a storage 216 of the state of the resumed function following the performance of the one or more operations. The stored state, which in some examples can be referred to as a continuation, may require additional operations to perform the specified workflow; the service B 236 may perform one or more of the additional operations. In some examples, the stored state may be stored 216 in persistent storage, accessible through one or more data storage services and/or systems via an invoke handle.

In an embodiment, the stored state may be accessed by the usage of an invoke handle. The invoke handle may be passed to the service B 236 from the resumed function through the usage of one or more communication networks and may utilize an API to facilitate the communications between the provider 232 and the service B. The service B 236 may perform 220 one or more operations as part of the specified workflow. In some examples, the service B 236 may perform one of one or more services including data processing, data storage, applications, interfaces, permissions, security policies, encryption and/or other such services. In an embodiment, the resumed function is terminated 218 while the service B 236 performs the one or more operations. In some examples, the resumed function may be terminated 218 by a termination (e.g., by exiting and relinquishing any allocated resources) of the virtual machine instance the resumed function was executing on.

Following the performance of the one or more operations, the service B 236 may pass 222 the invoke handle as well as various results of the one or more operations the service B 236 comprises to resume the function that was previously terminated. The service B 236 may utilize an API call from one or more APIs through one or more communication networks to facilitate the communication of the results and usage of the invoke handle and the various results to the provider 232. In an embodiment, the function is resumed 224 from the state by utilizing the invoke handle to obtain access to the stored state of the function, passed by the service B 236. The resumed function may utilize various results of the one or more operations the service B 236 performed in order to perform one or more functions and/or operations to complete the specified workflow. Additionally, the resuming of the function may comprise the instantiation of a virtual machine instance to perform one or more functions the function performs.

Additionally, the resuming 214 of the function may comprise the instantiation of a third virtual machine instance different from the first and second virtual machine instances to perform the one or more functions of the function. The different virtual machine instances may further execute on different physical hosts. In this manner, a virtual computer system service that provides the virtual machines to customers may use any available physical hosts to efficiently host the functions at different stages of the workflow.

In an embodiment, the resumed function completes the specified workflow and returns 226 the one or more results of the specified workflow to the customer 230. It should be noted that in some embodiments, one or more of the operations performed in the process 200 may be performed in various orders and combinations, including in parallel.

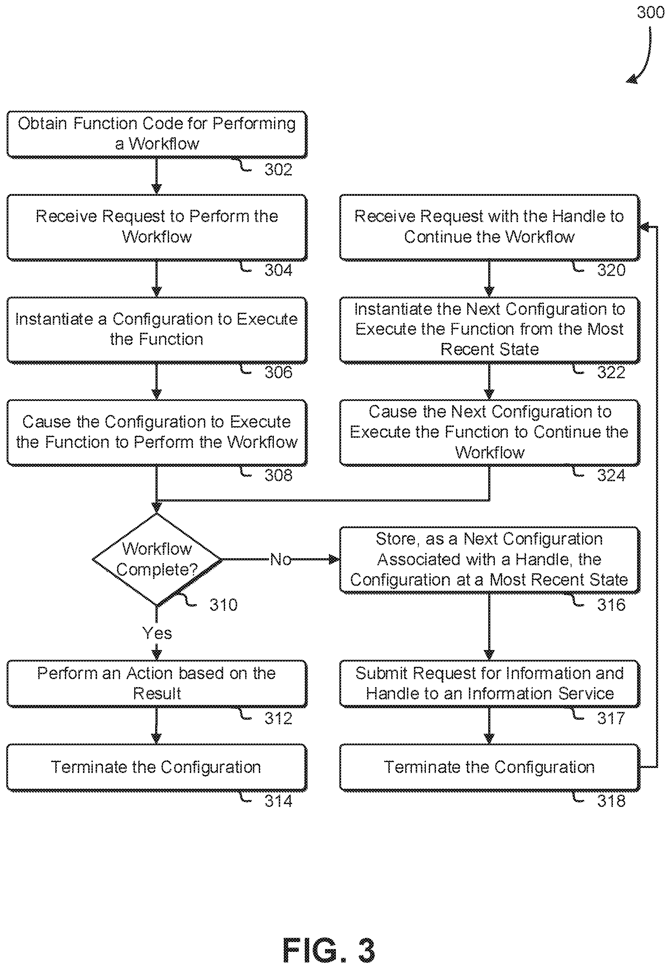

FIG. 3 is a flowchart illustrating an example of a process 300 for a continuation workflow in accordance with various embodiments. Some or all of the process 300 (or any other processes described, or variations and/or combinations of those processes) may be performed under the control of one or more computer systems configured with executable instructions and/or other data, and may be implemented as executable instructions executing collectively on one or more processors. The executable instructions and/or other data may be stored on a non-transitory computer-readable storage medium (e.g., a computer program persistently stored on magnetic, optical, or flash media).

For example, some or all of process 300 may be performed by any suitable system, such as a server in a data center, by various components of the system 900 described in conjunction with FIG. 9, such as the web server 906 or the application server 908, by multiple computing devices in a distributed system of a computing resource service provider, or by any electronic client device such as the electronic client device 902. In some of these examples, the system is a system under the management of a virtual computing service provided by a computing resource service provider, such as a serverless compute service, a software container service, or virtual computer system service, etc. The process 300 includes a series of operations wherein the system performing the process 300 performs a workflow utilizing continuation.

In an embodiment, the system performing the process 300 obtains 302 function code for performing a workflow. In some examples, the workflow may comprise various operations to perform a desired task. Tasks may include, but are not limit to, calculations, derivations, data processing, and/or variations thereof. Additionally, the function code may comprise various operations that are utilized to perform a workflow. In some examples, the function code may comprise inputs and various operations to determine various outputs. Additionally, the function code may be written in various programming languages, such as Java, JavaScript, Python, C, C++, SQL, Ruby, Perl, and/or variations thereof and may utilize a serverless compute service such as the serverless compute service described in connection with FIG. 1.

In an embodiment, the system receives 304 a request to perform the workflow. In some examples, the system receives the request via one or more communication networks, such as the Internet. The one or more communications networks may utilize various applications, interfaces, and/or APIs to communicate the request to perform the workflow.

The system may instantiate 306 a configuration to execute the function. In some examples, the system may instantiate one or more physical systems, such as a server computer, and/or one or more virtual systems, such as a virtual machine, to execute the function. Following the instantiation of the configuration, the system may cause 308 the configuration to execute the function to perform at least a portion of the workflow. In some examples, the configuration may execute the function to perform the workflow by executing one or more programs the function may comprise. The configuration may utilize one or more applications existing on the configuration to execute the function to perform the workflow.

The system may then determine 310 if the workflow is complete. For example, if the system has received the information needed from services and other sources and has completed the workflow, the system may proceed to perform 312 an action based on the result. In some examples, the result may be an output of the performed workflow, generated as a result of the one or more functions the performed workflow comprises. The system may determine the completion of the workflow based on one or more indicators existing on the configuration. In some examples, the completion of the workflow may comprise a generation of one or more outputs; a detection of the outputs may indicate the completion of the workflow. Additionally, in some examples, the system may determine that the workflow is completed by detecting various indicators such as metadata that may be produced as a result of the completion of the workflow. For example, if the workflow involves obtaining information from one or more other services (e.g., external to the system executing the function code), the system may determine that the workflow is completed once the information from the final service is obtained and processed.

If the workflow is complete, the system may terminate 314 the configuration. In some examples, the configuration may be terminated by terminating (e.g., by exiting and relinquishing any allocated resources) the one or more systems instantiated as a result of instantiating the configuration. The configuration may comprise one or more physical systems, such as a server computer, and/or one or more virtual systems, such as a virtual machine; these systems may be terminated and/or de-allocated as a result of the termination.

On the other hand, if the system determines 310 workflow is not complete (for example, if additional information is to be obtained from additional services), the system may store 316, as a next configuration associated with a handle, the configuration at a most recent state. In various embodiments, the stored configuration may be referred to as a continuation. Additionally, in various embodiments, rather than storing the full configuration, the system may store 316 the configuration as a set of differences between the most recent configuration and a previous configuration. In this manner, the full configuration can be recreated by additively combining the previous configuration with the set of differences. For example, a first stored configuration may be a snapshot of a base configuration, a second stored configuration may comprise a first set of differences between a snapshot of the second running configuration and the snapshot of the first configuration, a third stored configuration may comprise a second set of differences between the a snapshot of the third running configuration and the combination of the first snapshot and the first set of differences, and so on.

In some examples, the system may store 316 the configuration in persistent storage, such as in one or more data storage and/or systems. Upon storage of the configuration, a handle, such as a URN, may be generated (e.g, by the data storage service or by the system performing the process 300) that refers to the stored configuration. The handle may be usable to revive the stored configuration from storage. For example, a call to a virtual computing service that includes the handle may cause the virtual computing system to determine the location in storage of the stored configuration, fetch the stored configuration from storage, and use the stored configuration to instantiate a virtual machine and the function to resume execution from the state at which the stored configuration was stored. As noted above, the virtual machines may not necessarily be instanitated on the same physical hosts, thereby allowing different stages of the functions to be performed by different physical hosts of a distributed computing system.

Additionally, the workflow may require one or more operations that may be performed by one or more additional services, such as the service A 106 and service B of FIG. 1. Such one or more additional services may include data processing, data storage, applications, interfaces, permissions, security policies, encryption and/or other such services. In some examples, the performance of the one or more additional services may comprise submitting 317 a request to a service and passing the handle, which may be denoted as an invoke handle, to the service. In this manner, the service can re-instantiate the configuration upon completion of its one or more operations. In various embodiments, the system may terminate 318 the configuration to avoid any unnecessary computational or other resource costs that may be incurred to manage an active configuration.

The system may receive 320 a request with the handle to continue the workflow. In various embodiments, the request may originate from the service to which the request 317 was submitted. Using the handle, the system may then instantiate 322 the next configuration to execute the function from the most recent state. In some examples, instantiating the next configuration may comprise preparing one or more physical systems, such as a server computer, and/or one or more virtual systems, such as a virtual machine to execute the function. In an embodiment, the system utilizes the handle the request comprises to instantiate the next configuration; the handle the request may provide the system with access to the most recent state of the previous configuration.

In an embodiment, the system performing the process 300 causes 324 the next configuration to execute the function to continue the workflow. In some examples, the configuration may execute the function to perform the workflow by executing one or more programs the function may comprise. The configuration may utilize one or more applications existing on the configuration to execute the function to perform the workflow. Following the execution of the function, the system again determines 310 if the workflow is complete, and, if so, performs the operations of 312 and 314 as described in the preceding paragraphs. If the workflow requires information from an additional service, the system may proceed to repeat the operations of 316-324 for the additional service. It should be noted that in various embodiments, one or more of the operations performed in the process 300 may be performed in various orders and combinations, including in parallel. For example, in some embodiments the function code for performing the workflow is received with the request to perform the workflow, and as such the operations of 302-4 may be combined.

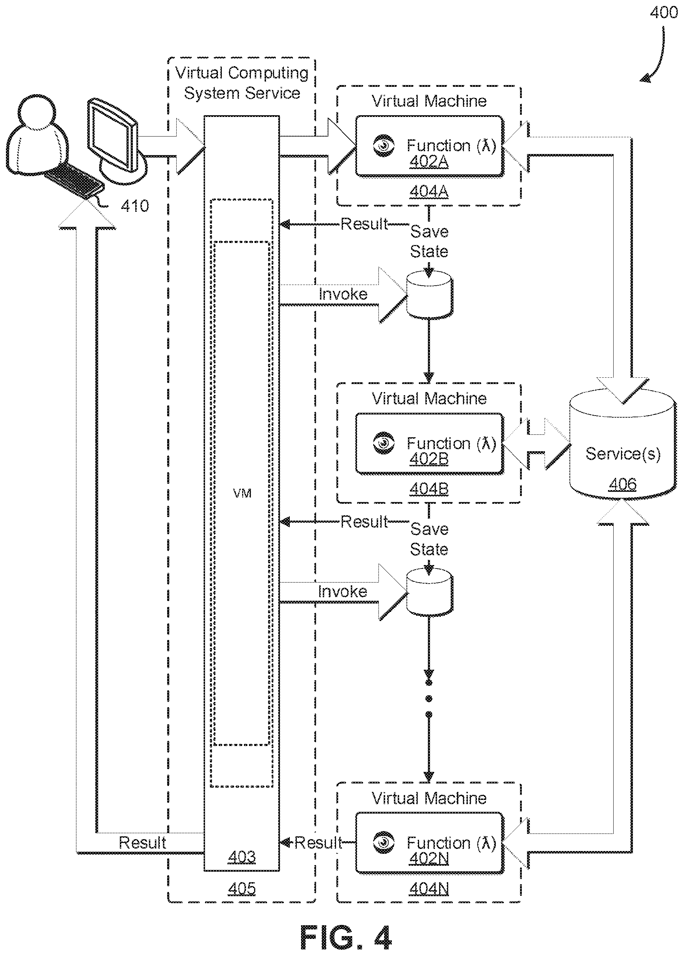

FIG. 4 illustrates an example of chaining virtual machines in accordance with an embodiment. Specifically, FIG. 4 depicts an example 400 of a system in which a customer 410 causes a VM configuration of a virtual computer system service 405 to utilize chained virtual machines continuations to perform a specified workflow. In an embodiment, the customer 410 is similar to the customer 110 of FIG. 1. For example, the customer 410 may be an individual, group of individuals, business entity or other organization that has a business relationship with the computing resource service provider, and/or a computing device used by the aforementioned entities to perform operations under the control of or on behalf of the customer. The customer 410 may communicate to the virtual computing system service 405 through one or more communication networks, such as the Internet. Further, the various communications to/from the customer 410 may be orchestrated by a browser or other application executing on a client device of the customer 410.

In an embodiment, the virtual computer system service 405 is used by a computing resource service provider for providing computer system resources for customers. The virtual computer system service may provide such computer system resources by instantiating virtual machine instances on physical hardware. The physical hardware may include physical hosts, which may include any device or equipment configured to execute instructions for performing data computation, manipulation or storage tasks, such as a computer or server similar to the electronic client device 902 and the application server 908 described in conjunction with FIG. 9. A computing resource service provider may provide access to computer systems using a service such as a virtual computer system service that may be a collection of computer resources configured to instantiate virtual machine instances on behalf of a customer. The customer may interact with the virtual computer system service to provision, place and operate virtual machine instances that are instantiated on physical computer devices hosted and operated by the computing resource service provider.

In an embodiment, the customer 410 communicates to the virtual computing system service 405 through one or more APIs. In some examples, an application programming interface may be a set of subroutine definitions, communication protocols, and/or software tools that provide a method of communication from the customer 410 and the virtual computing system service 405. In an embodiment, the virtual computing system service 405 comprises services such as a serverless compute service that performs various functions. In an embodiment, a serverless compute function is triggered when a serverless compute endpoint is invoked and computing resources in which the function can run are provisioned in response to the trigger being detected. The computing resources may be in accordance with a computing environment that is suitable to execute the function. The computing resources can be physical, which may include physical server computers, or virtual, which may include virtual machines.

In an embodiment, the customer 410 causes a virtual machine 403 managed by the virtual computer system service 405 to invoke the first stage 402A of a function via an API call to perform a specified workflow. For example, the customer 410 may be an administrator of the virtual machine 403 and may cause the virtual machine 403 to initiate the workflow (e.g., a database operation, etc.) associated with the stages 402A-02N of the function via a graphical user interface (GUI) to the virtual machine 403. In some examples, a database is an organized collection of data, such as tables, queries, reports, views, and other stored objects. As another example, the virtual machine 403 may be hosting a web-based online marketplace, and the customer 410 may be an individual conducting a transaction via the web-based online marketplace, and one or more interactions with the web-based online marketplace causes the virtual machine 403 to initiate a workflow associated with the stages 402A-02N of the function to perform transactional operations.

In some examples, the invocation by the virtual machine 403 of the stages 402A-02N of the function may comprise causing virtual machines 404A-04N to be instantiated (e.g., within the virtual computer system service 405 or some other computing system service, such as an event-driven, serverless compute service) to execute the stages 402A-02N of the function, starting with a first stage 402A of the function. In various embodiments, the virtual machines 404A-04N are not necessarily instantiated on the same physical host. The first stage 402A of the function may include an instantiation of the virtual machine 404A to perform the first stage 402A of the function.

In an embodiment, the first stage 402A of the function comprises the performance of one or more operations; these one or more operations may require the usage of one or more services 406 (e.g., other than the virtual computer system service 405), which may comprise one of one or more services including data processing, data storage, applications, interfaces, permissions, security policies, encryption and/or other such services. For example, the specified workflow may comprise a multi-stage analysis of a large amount of data stored within the one or more services 406. The first stage 402A of the function may utilize the one or more services 406 retrieve a portion of the data, and produce results based upon an analysis of the data. In various examples, the results of the first stage 402A of the function may be provided to the virtual machine 503 and/or other service or entity for additional processing. The state of the first stage 402A of the function may be saved and stored following the performance of the one or more operations of the first stage 402A of the function.

Additionally or alternatively, in various examples the results of the first stage 402A of the function may be stored with its state such that the results are accessible to the next stage of the function upon revival from the stored state. In some examples, the stored state may be stored in persistent storage, such as a data storage system and/or service accessible to the virtual computing system service 405, and may be accessible via an invoke handle that may be passed from the first stage 402A of the function to the virtual machine 403. Following the performance of the one or more operations of the first stage 402A of the function and the passing of the handle to the virtual machine 403, the virtual machine 404A may be terminated (e.g., by exiting and relinquishing any allocated resources).

At a time when the next stage of the workflow is to be performed (e.g., by the second stage 402B of the function), the second stage 402B may be invoked using the passed invoke handle as described in the present disclosure. In some embodiments, the customer 410 may invoke the second stage 402B of the function on demand (e.g., via a GUI). In other embodiments, the virtual machine 403 may invoke the second stage 402B of the function upon completion of its processing of the results the virtual machine 403 received from the first stage 402A of the function. In an embodiment, the second stage 402B of the function is instantiated utilizing the saved state of the first stage 402A of the function accessed via the invoke handle. The second stage 402B of the function may resume performance from the point at which the state of the first stage 402A of the function was stored. In some examples, the invocation of the second stage 402B of the function comprises an instantiation (e.g., by a virtual computer system service, software container service, serverless compute service, etc.) of the virtual machine 404B to perform the second stage 402B of the function.

In an embodiment, the second stage 402B of the function comprises the performance of one or more operations; these one or more operations may require the usage of the one or more services 406, which may comprise data processing, data storage, applications, interfaces, permissions, security policies, encryption and/or other such services. For example, referring back to the above example, the specified workflow may comprise a multi-stage analysis of a large amount of data stored within the one or more services 406. The second stage 402B of the function may utilize the one or more services 406, retrieve another portion of the data, and produce results based upon an analysis of the data.

In various examples, the results of the second stage 402B of the function may be returned to the virtual machine 403 for additional processing. Additionally, the state of the second stage 402B of the function may be saved and stored following the performance of the one or more operations. Additionally or alternatively, in various examples the results of the first stage 402A of the function may be stored with its state such that the results are accessible to the next stage of the function upon revival from the stored state. In some examples, the stored state may be stored in persistent storage, such as a data storage system and/or service accessible to the virtual computing system service 405, and may be accessible via an invoke handle that may be passed from the second stage 402B of the function to the virtual machine 403. Following the performance of the one or more operations of the second stage 402B and the passing of the handle to the virtual machine 403, the virtual machine 404B may be terminated (e.g., by exiting and relinquishing any allocated resources).

In various embodiments, the customer 410 and/or virtual machine 403 may continue to invoke and terminate functions an N number of times until final stage 402N of the function that completes the specified workflow. In some examples, the customer 410 and/or virtual machine 403 may continue to invoke and terminate any number of functions until the specified workflow is complete. Furthermore, the customer 410 may continue to instantiate and terminate virtual machines an N number of times, corresponding to the N number of functions invoked, until virtual machine 404N in which the specified workflow is complete. Continuing the above example, the specified workflow may comprise an analysis of a large amount of data stored within the one or more services 406. The customer 410 and/or virtual machine 403 may continually invoke functions and instantiate virtual machines to access portions of the large amount of data stored within the one or more services 406 until all of the desired data stored within the one or more services 406 is analyzed; the analysis of the desired data stored within the one or more services 406 may be completed with the virtual machine 404N comprising the final stage 402N of the function. Following the completion of the specified workflow, the results of the specified workflow may be returned to the customer 410 or virtual machine 403 of the virtual computing system service 405, which may return the results to the customer 410. Additionally, the virtual machine 404N comprising the final stage 402N of the function may be terminated (e.g., by exiting and relinquishing any allocated resources).

An example use case for chained virtual machine configurations as described in the present disclosure may be to process large amounts of data. For example, a large number of digital images may be stored with a storage service (e.g., the one or more services 406) and the customer 410 may seek to retrieve all of the stored digital images that contain a "blue car." The first stage 402A may retrieve a first subset of images from the one or more services 406 and determine which digital images of the first subset of images contain enough blue pixels to warrant further processing and return those digital images to the virtual machine 403. The virtual machine 403 may then examine these digital images having sufficient (e.g., exceeds a threshold) blue pixels to determine whether said blue pixels fit the shape of a "car." After the virtual machine 403 finishes processing the digital images returned by the first stage 402A of the function, the virtual machine 403 may cause the second stage 402B of the function to be invoked to retrieve a second subset of images and filter those digital images to return the ones having sufficient blue pixels to warrant further processing by the virtual machine 403. This process may continue until the last subset of images is retrieved from the one or more services 406 and processed by the final stage 402N of the function.

As another example, the virtual machine 403 may be executing a process to back up data objects and the first stage 402A of the function retrieves a first set of data objects that have not yet been backed up. In the example, the first stage 402A of the function saves its state and returns a first invoke handle to the saved state and the first set of data objects to the virtual machine 403 for backup, and terminates. In the example, after the virtual machine 403 has backed up the first set of data objects, it invokes the second stage 402B of the function sing the first invoke handle, whereupon the second stage of the function retrieves a second set of data objects that have not been backed up. Subsequently, the second stage 402B of the function saves its state and returns a second invoke handle to the saved state and the second set of data objects to the virtual machine 403 for backup, and terminates. In this example, this process may be repeated until all of the data objects are backed up.

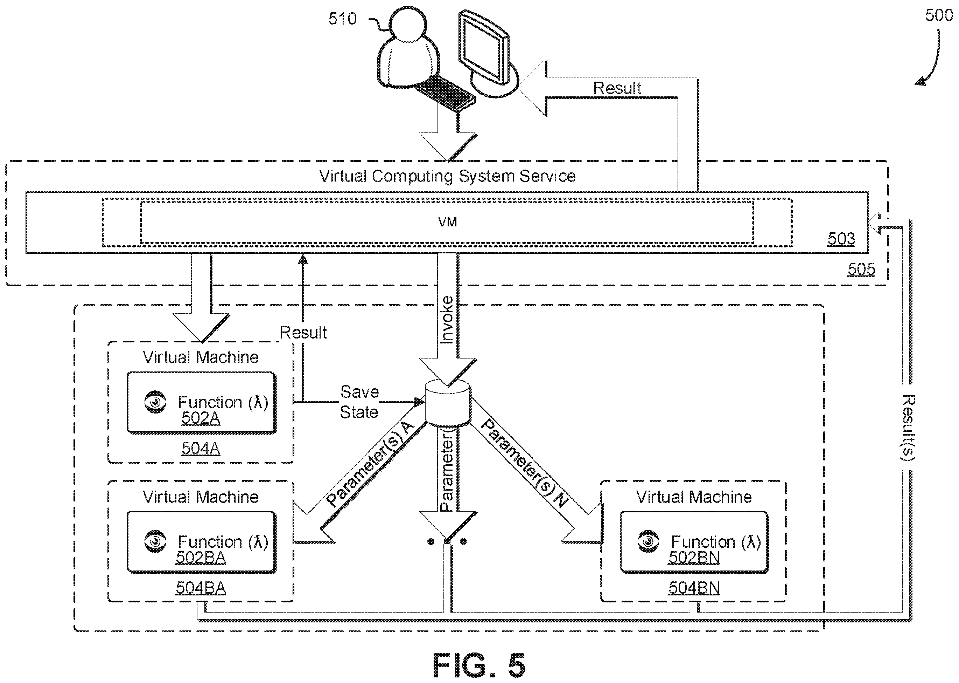

FIG. 5 illustrates an example of fanning out virtual machines in accordance with an embodiment. Specifically, FIG. 5 depicts an example 500 of a system in which a customer 510 causes a virtual machine 503 of a virtual computer system service 505 to utilize fanned out virtual machines continuations in a parallel configuration in the performance of a specified workflow. In an embodiment, the customer 510 is similar to the customer 110 and the customer 410 of FIGS. 1 and 4 respectively. For example, customer 510 may be an individual, group of individuals, business entity or other organization that has a business relationship with the computing resource service provider, and/or a computing device used by the aforementioned entities to perform operations under the control of or on behalf of the customer. The customer 510 may communicate to the virtual computing system service 505 through one or more communication networks, such as the Internet. Further, the various communications to/from the customer 510 may be orchestrated by a browser or other application executing on a client device of the customer 510.

In an embodiment, the virtual computer system service 505 is similar to the virtual computer system service 405 of FIG. 4. In an embodiment, the customer 510 communicates to the virtual computing system service 505 through one or more APIs. In some examples, an application programming interface may be a set of subroutine definitions, communication protocols, and/or software tools that provide a method of communication from the customer 510 and the virtual computing system service 505. In an embodiment, the virtual computing system service 505 comprises services such as a serverless compute service that perform various functions. In an embodiment, a serverless compute function is triggered when a serverless compute endpoint is invoked and computing resources in which the function can run are provisioned in response to the trigger being detected. The computing resources may be in accordance with a computing environment that is suitable to execute the function. The computing resources can be physical, which may include physical server computers, or virtual, which may include virtual machines.

In an embodiment, the customer 510 causes a virtual machine 503 managed by the virtual computer system service 505 to invoke the first stage 502A of the function via an API call to perform a specified workflow. For example, the customer 510 may be an administrator of the virtual machine 503 and may cause the virtual machine 503 to initiate the workflow (e.g., a database operation, etc.) associated with the stages 502A-02BN of the function via a GUI to the virtual machine 503. As another example, the virtual machine 503 may be hosting a web-based online marketplace and the customer 510 may be an individual conducting a transaction via the web-based online marketplace, and one or more interactions with the web-based online marketplace causes the virtual machine 503 to initiate a workflow associated with the stages 502A-02BN of the function to perform transactional operations.

In some examples, the invocation by the virtual machine 503 of the stages 502A-02BA of the function comprises causing virtual machines 504A-04BN to be instantiated (e.g., within the virtual computer system service 505 or some other computing system service, such as an event-driven, serverless compute service) to execute the stages 502A-02BN of the function, starting with a first stage 502A of the function. The first stage 402A of the function may include an instantiation of the virtual machine 504A to perform the first stage 502A of the function. In various embodiments, the virtual machines 504A-04BN are not necessarily instantiated on the same physical host.

In an embodiment, the first stage 502A of the function comprises the performance of one or more operations, which may comprise interacting with one of one or more services (not pictured) including data processing, data storage, applications, interfaces, permissions, security policies, encryption and/or other such services. In various examples, the results of the first stage 502A of the function may be provided to the virtual machine 503 and/or other service or entity for additional processing. Additionally, the state of the first stage 502A of the function may be saved and stored following the performance of the one or more operations of the first stage 502A of the function.

Additionally or alternatively, in various examples the results of the first stage 502 of the function may be stored with its state such that the results are accessible to the next stage of the function upon revival from the stored state. In some examples, the stored state may be stored in persistent storage, such as a data storage system and/or service accessible to the virtual computing system service 505, or random access memory of a host computing device and may be accessible via an invoke handle that may be passed from the first stage 502A of the function to the virtual machine 503. Following the performance of the one or more operations of the first stage 502A of the function and the passing of the handle to the virtual machine 503, the virtual machine 504A may be terminated in a manner described in the present disclosure.

In various embodiments, the results of the first stage 502A of the function may comprise indications to perform the remaining portions of the specified workflow in parallel as a set of second stages 502BA-02BN of the function. Thus, at a time when the next stage of the workflow is to be performed, the customer 510 and/or virtual machine 503 may invoke N number of functions comprising the set of second stages 502BA-02BN of the function to perform various aspects of the specified workflow in parallel. Each of the set of second stages 502BA-02BN of the function may resume performance from the point at which the state of the first stage 502A of the function was stored, but may be configured to perform their respective operations in parallel on different data or in a different manner from the others of the set of second stages. For example, the virtual machine 503 may invoke each of the set of second stages 502BA-02BN of the function using different parameters, which may indicate different data and/or different ways of processing their respective data. Further, each of the set of second stages 502BA-02BN of the function may be invoked from the same saved state of the first stage 502A of the function.

In an embodiment, the N number of functions invoked utilizing the invoke handle passed from the first stage 502A of the function comprises instantiating N number of virtual machines, comprising virtual machine 504BA to virtual machine 504BN. In some examples, the specified workflow may comprise various operations that may be made more efficient through the usage of parallel processing. The functions comprising the set of second stages 502BA-02BN of the function may operate in a parallel configuration to provide a more efficient processing of the specified workflow. In some examples, the specified workflow may comprise operations such as data partitioning, synchronization, load balancing, and/or variations thereof; these operations may be more efficiently performed in a parallel configuration. Following the completion of the specified workflow, the results of the specified workflow may be returned to the virtual computing system service 505, which may return the results to the customer 510 and/or the virtual machine 503. Additionally, the virtual machines 504BA to 504BN instantiated to perform the functions comprising function 502BA to 502BN may be terminated.

Note too, that, depending on the particular workflow, some, all, or none of the set of second stages 502BA-02BN of the function may cause their own state to be stored and pass a handle, which can be used to invoke their respective stored state, to an entity before terminating. In this manner, depending on the particular workflow, members of the set of second stages 502BA-05BN of the function may themselves fan out third stages of the function, which in turn may fan out fourth stages of the function, and so on as would be suitable for the workflow. Additionally or alternatively, some, all, or none of the set of second stages 502BA-02BN of the function may cause their own state to be stored and pass a handle, which can be used to invoke their respective stored state in the manner described in conjunction with FIG. 4. In this manner, the embodiments illustrated in FIGS. 4 and 5 may be combined in various orders as would be suitable for performing the particular workflow of the function.

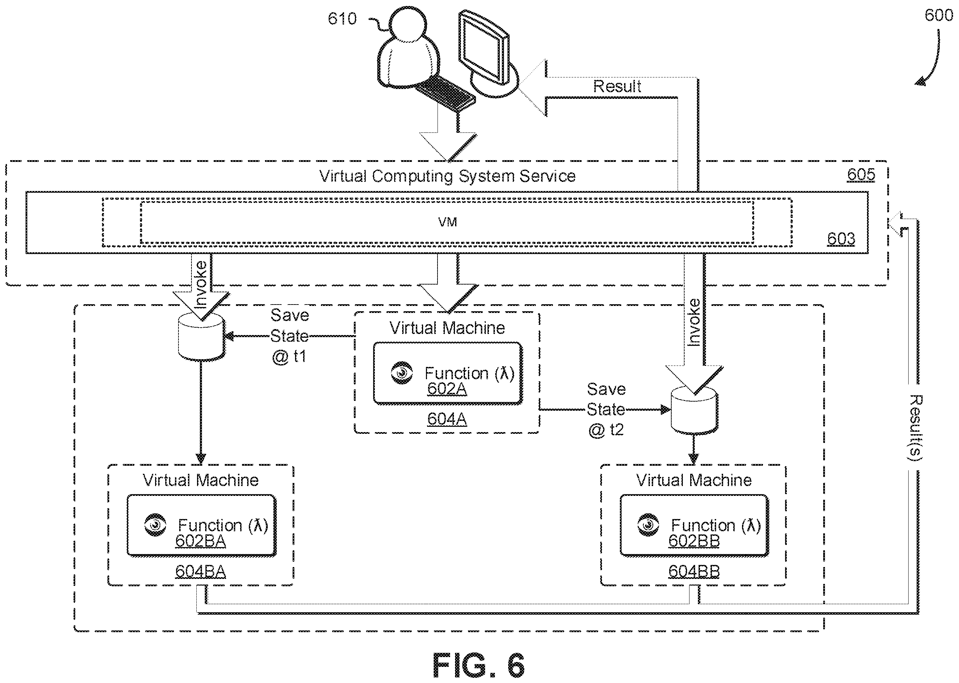

FIG. 6 illustrates an example of fanning out virtual machines in accordance with another embodiment. Specifically, FIG. 6 depicts an example 600 of a system in which a customer 610 causes a virtual machine 603 of a virtual computer system service 605 to utilize fanned out virtual machines continuations in a parallel configuration in the performance of a specified workflow. In an embodiment, the customer 610 is similar to the customers 110, 410, and 510 of FIGS. 1, 4, and 5 respectively. For example, the customer 610 may be an individual, group of individuals, business entity or other organization that has a business relationship with the computing resource service provider, and/or a computing device used by the aforementioned entities to perform operations under the control of or on behalf of the customer. The customer 610 may communicate to the virtual computing system service 605 through one or more communication networks, such as the Internet. Further, the various communications to/from the customer 610 may be orchestrated by a browser or other application executing on the customer 610.

In an embodiment the virtual computer system service 605 is similar to the virtual computer system services 405 and 505 of FIGS. 4 and 5 respectively. In an embodiment, the customer 610 communicates to the virtual computing system service 605 through one or more APIs. In some examples, an application programming interface may be a set of subroutine definitions, communication protocols, and/or software tools that provide a method of communication from the customer 610 and the virtual computing system service 605. In an embodiment, the virtual computing system service 605 comprises services such as a serverless compute service that perform various functions. In an embodiment, a serverless compute function is triggered when a serverless compute endpoint is invoked and computing resources in which the function can run are provisioned in response to the trigger being detected. The computing resources may be in accordance with a computing environment that is suitable to execute the function. The computing resources can be physical, which may include physical server computers, or virtual, which may include virtual machines.

In an embodiment, the customer 610 causes a virtual machine 503 managed by the virtual computer system service 505 to invoke the first stage 602A of the function via an API call to perform a specified workflow. For example, the customer 610 may be an administrator of the virtual machine 603 and may cause the virtual machine 603 to initiate the workflow (e.g., a database operation, etc.) associated with the stages 602A-02BB of the function via a GUI to the virtual machine 603. As another example, the virtual machine 603 may be hosting a web-based online marketplace and the customer 610 may be an individual conducting a transaction via the web-based online marketplace, and one or more interactions with the web-based online marketplace causes the virtual machine 603 to initiate a workflow associated with the stages 602A-02BB of the function to perform transactional operations.

In some examples, the invocation by the virtual machine 603 of the first stage 602A of the function comprises an instantiation of the virtual machine 604A to perform the first stage 602A of the function. In an embodiment, the first stage 602A of the function comprises the performance of one or more operations, which may comprise one of one or more services including data processing, data storage, applications, interfaces, permissions, security policies, encryption and/or other such services. In various examples, the results of the first stage 602A of the function are provided to the virtual machine 603 of the virtual computing system service 605 and/or service or entity for additional processing. Additionally, the state of the first stage 602A of the function may be saved and stored following the performance of the one or more operations of the first stage 602A of the function. As depicted in FIG. 6, multiple states of the first stage 602A of the function may be saved. In embodiments, the states may be stored at different points in time; for example, a state of the first stage 602A may be saved at a first time (t1) and another state of the first stage 602A of the function may be saved at a second time (t2), thereby representing different states of the first stage 602A of the function. Each of the next stages 602BA-02BB of the function may resume performance of one or more operations from the point at which the respective states 602BA-02BB were stored.

In some examples, the stored state may be stored in persistent storage, such as a data storage system and/or service accessible to the virtual computing system service 605, or random access memory of a host computing device and may be accessible via an invoke handle that may be passed from the first stage 602A of the function to the virtual machine 603. In various embodiments, the virtual machine 604A may cause the virtual computing system service 605 to utilize the invoke handle to invoke a second stage 602BA and third stage 602BB of the function using different saved states of the first stage 602A of the function; the invocation of the function may comprise an instantiation of virtual machine 604BA and virtual machine 604BB.

In some examples, the specified workflow may comprise various operations that may be made more efficient through or require the usage of parallel processing. The functions comprising the next stages 602BA-02BB of the function may operate in a parallel configuration to perform various processes of the specified workflow. In some examples, the specified workflow may comprise operations such as data partitioning, synchronization, load balancing, and/or variations thereof; these operations may be more efficiently performed in a parallel configuration. Following the completion of the specified workflow, the results of the specified workflow may be returned to the virtual machine 603, which may return the results to the customer 610. Additionally, the virtual machines instantiated to perform the stages of the function comprising function 602BA and function 602BB may be terminated in a manner described in the present disclosure.

Note too, that, depending on the particular workflow, some, all, or none of the next stages 602BA-02BN of the function may cause their own state to be stored and pass a handle one or more times (similar to the manner described for the first stage 602A of the function), which can be used to invoke their respective stored state, to an entity before terminating. In this manner, depending on the particular workflow, members of the next stages 602BA-05BN of the function may themselves fan out third stages of the function (similar to 502BA-02BN of FIG. 5 and 602BA-02BN), which in turn may fan out fourth stages of the function in a similar manner, and so on as would be suitable for the workflow. Additionally or alternatively, some, all, or none of the next stages 602BA-02BN of the function may cause their own state to be stored and pass a handle, which can be used to invoke their respective stored state in the manner described in conjunction with FIG. 4. In this manner, the embodiments illustrated in FIGS. 4-6 may be combined in various orders as would be suitable for performing the particular workflow of the function.

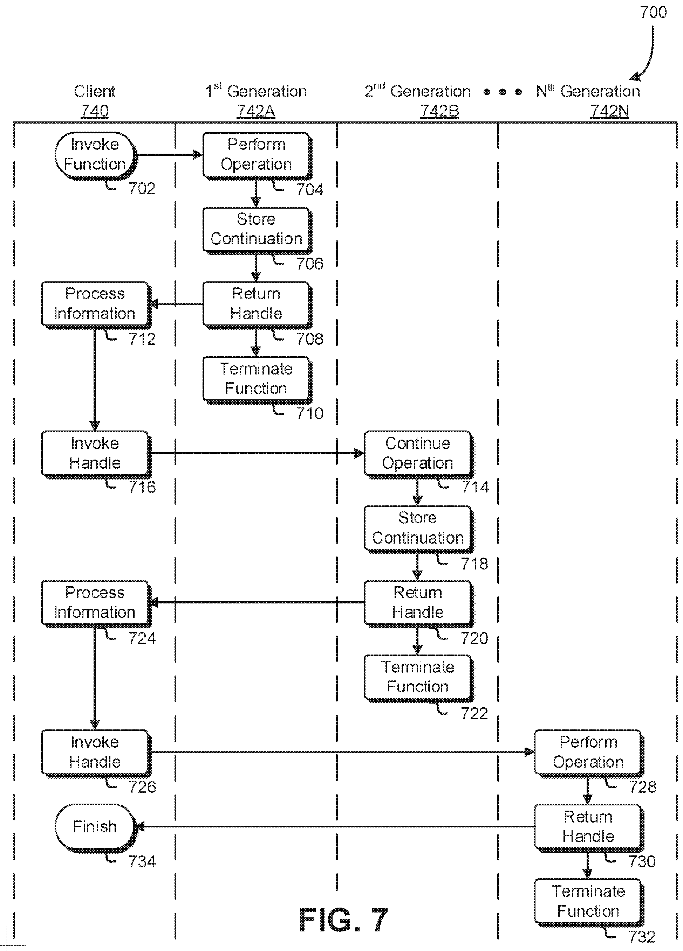

FIG. 7 is a swim diagram illustrating an example of a process 700 for chaining virtual machines in accordance with various embodiments. Some or all of the process 700 (or any other processes described, or variations and/or combinations of those processes) may be performed under the control of one or more computer systems configured with executable instructions and/or other data, and may be implemented as executable instructions executing collectively on one or more processors. The executable instructions and/or other data may be stored on a non-transitory computer-readable storage medium (e.g., a computer program persistently stored on magnetic, optical, or flash media).

For example, some or all of process 700 may be performed by any suitable system, such as a server in a data center, by various components of the system 900 described in conjunction with FIG. 9, such as the web server 906 or the application server 907, by multiple computing devices in a distributed system of a computing resource service provider, or by any electronic client device such as the electronic client device 902. The process 700 includes a series of operations wherein a system utilizes chained virtual machines to process a specified workflow.

In an embodiment, a client 740 invokes 702 a first generation 742A of a function via an API call to perform 704 an operation the specified workflow comprises. In some embodiments, the client 740 may be a computing device operated by a customer of the computing resource service provider or other user interacting with services of the computing resource service provider. In other embodiments, the client 740 may be a virtual machine under the control of a customer of the computing resource service provider.

The first generation 742A of the function may comprise one or more operations, and may require the instantiation of a virtual machine instance to perform the function. For example, the first generation 742A of the function may comprise analyzing a portion of a large set of data. In an embodiment, the first generation 742A of the function comprises the performance of one or more operations, and a storage 706 of a continuation or state of the function following the performance of the one or more operations. The stored state, which in some examples can be referred to as a continuation, may be stored through one or more data store services and/or systems, and may be accessible through the usage of an invoke handle.

The invoke handle may be returned 708 to the client 740; the client 740 may process 712 information returned by the first generation 742A of the function to perform one or more operations as part of the specified workflow. Following the returning of the handle, the invoked function may be terminated 710. In some examples, the invoked function may be terminated by a termination of the instantiated virtual machine instance for the invoked function.

In an embodiment, the client 740 invokes 716 a handle to resume the terminated function. The terminated function may be resumed by the instantiation of a virtual machine instance to perform a second generation 742B of the function. In some examples, the invoke handle may be utilized to continue 714 the operation of the previously terminated function. For example, the previously terminated function may have comprised analyzing a portion of a large set of data; the continued operation of the second generation 742B of the function may continue to analyze additional portions of the large set of data. In an embodiment, the continued operation of the second generation 742B of the function comprises the performance of one or more operations, and a storage 718 of a continuation or state of the second generation 742B of the function following the performance of the one or more operations. The stored state, which in some examples can be referred to as a continuation, may be stored through one or more data store services and/or system, and may be accessible through the usage of an invoke handle.

The invoke handle may be returned 720 to the client 740; the client 740 may process 724 information returned by the second generation 742B of the function to perform one or more operations as part of the specified workflow. Following the returning of the handle, the second generation 742B of the function may be terminated 722. In some examples, the second generation 742B of the function may be terminated by a termination of the instantiated virtual machine instance for the function.

In an embodiment, the client 740 invokes 726 a handle to resume the terminated function. In some examples, the invoke handle may be utilized to perform 728 the operation of the function an N number of times. Additionally, resuming the function an N number of times may comprise instantiating an N number of virtual machine instances to perform the functions. In an embodiment, the client 740 continues to invoke the generations of functions based on the information returned by the previous functions. For example, the generations of functions may be utilized to analyze a large set of data; the generations of functions may be continually invoked an N number of times until the large set of data is completely analyzed. Following the completion of the operations the specified workflow comprises, the invoke handle may be returned 730, and the final generation 742N of the function may be terminated 732. Additionally, the results of the generations of functions may be returned to the client 740 to finish 734 execution. It should be noted that in various embodiments one or more of the operations performed in the process 700 may be performed in various orders and combinations, including in parallel.

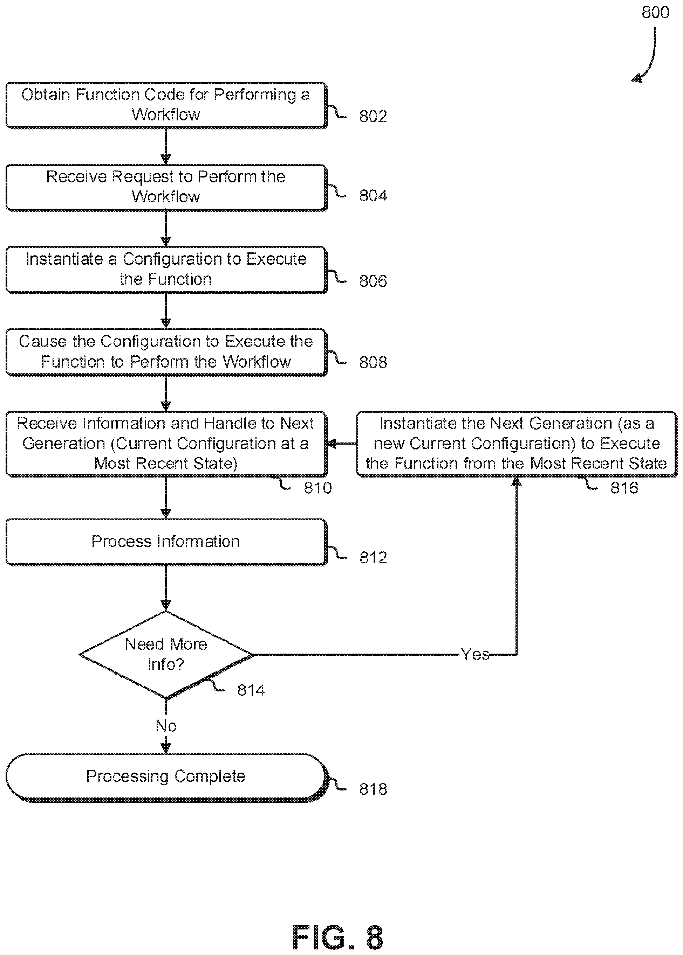

FIG. 8 is a flowchart illustrating an example of a process 800 for chaining virtual machines in accordance with various embodiments. Some or all of the process 800 (or any other processes described, or variations and/or combinations of those processes) may be performed under the control of one or more computer systems configured with executable instructions and/or other data, and may be implemented as executable instructions executing collectively on one or more processors. The executable instructions and/or other data may be stored on a non-transitory computer-readable storage medium (e.g., a computer program persistently stored on magnetic, optical, or flash media).

For example, some or all of process 800 may be performed by any suitable system, such as a server in a data center, by various components of the system 900 described in conjunction with FIG. 9, such as the web server 906 or the application server 908, by multiple computing devices in a distributed system of a computing resource service provider, or by any electronic client device such as the electronic client device 902. The process 800 includes a series of operations wherein the system performing the process 800 performs a workflow utilizing chaining virtual machines.

In an embodiment, the system performing the process 800 obtains 802 a function code for performing a workflow. In some examples, the workflow may comprise various operations to perform a desired task. Tasks may include, but are not limit to, calculations, derivations, data processing, and/or variations thereof. Additionally, the function code may comprise various operations that are utilized to perform a workflow. In some examples, the function code may comprise inputs and various operations to determine various outputs. Additionally, the function code may be written in various programming languages, such as Java, JavaScript, Python, C, C++, SQL, Ruby, Perl, and/or variations thereof and may utilize a serverless compute service such as the serverless compute service described in connection with FIG. 1.

In an embodiment, the system receives 804 a request to perform the workflow. In some examples, the system receives the request via one or more communication networks, such as the Internet. The one or more communications networks may utilize various applications, interfaces, and/or APIs to communicate the request to perform the workflow. The system may instantiate 806 a configuration to execute the function. In some examples, the system may instantiate one or more physical systems, such as a server computer, and/or one or more virtual systems, such as a virtual machine, to execute the function. Following the instantiation of the configuration, the system may cause 808 the configuration to execute the function to perform the workflow. In some examples, the configuration may execute the function to perform the workflow by executing one or more programs the function may comprise. The configuration may utilize one or more applications existing on the configuration to execute the function to perform the workflow.

Following the execution of the function, the system may receive 810 information and handle to next generation, which comprises the current configuration at a most recent state. In some examples, the information received may be information generated as a result of the execution of the function. The system may then process 812 the information to determine the progress in the performance of the workflow. For example, the workflow may comprise an analysis of a large set of data. The information returned may be an analysis of a portion of the large set of data; the system may then determine that more information is needed 814 that comprises analyses of the remainder of the large set of data.

If more information is required, the system may instantiate 816 the next generation (as a new current configuration) to execute the function from the most recent state. The next generation may utilize the handle to execute the function to perform additional processes of the workflow. Referring to the above example, the workflow may comprise an analysis of a large set of data. A portion of the large set of data may have been analyzed by the previous configuration; the next generation may execute the function from the most recent state to resume the analysis of the large set of data to process the remainder of the large set of data.

If no more information is required, the system may determine that the performance of the workflow has finished, and the processing 818 is complete. In some examples, the results of the workflow may be returned to the system for further processing. It should be noted that, in various embodiments, one or more of the operations performed in the process 800 may be performed in various orders and combinations, including in parallel. For example, in some embodiments the function code for performing the workflow is received with the request to perform the workflow, and as such the operations of 802-4 may be combined.

Note that in the context of describing disclosed embodiments, unless otherwise specified, use of expressions regarding executable instructions (also referred to as code, applications, agents, etc.) performing operations that "instructions" do not ordinarily perform unaided (e.g., transmission of data, calculations, etc.) denote that the instructions are being executed by a machine, thereby causing the machine to perform the specified operations.

As one skilled in the art will appreciate in light of this disclosure, certain embodiments may be capable of achieving certain advantages, including some or all of the following: (1) Techniques described and suggested in the present disclosure improve the field of computing, especially the field of virtual computing, by storing the state of functions and virtual machines while they are waiting for a response from other services, thereby not incurring compute costs during idle times. (2) Additionally, techniques described and suggested in the present disclosure improve the efficiency and functioning of execution of multi-stage computer programs by not restricting the computer programs to a single physical host for execution of all stages; rather, each stage of the multi-stage computer program may be executed by any available physical host that has sufficient resources to execute that stage of the computer program. In this manner, such computer programs can be launched and executed quickly in a distributed and load balanced way. (3) Techniques described and suggested in the present disclosure additionally improve the field of computing services by improving scalability of workflows because each stage of a workflow can run on a different physical host, which means the workflow can be efficiently balanced across a large fleet, avoiding the problem of a long-running workflow executed on a single host. (4) Moreover, techniques described and suggested in the present disclosure are necessarily rooted in computer technology in order to overcome problems specifically arising with computing resources (e.g., memory and/or processor time) that, even though they are sitting idle, they are unusable because they have been allocated to a virtual machine or other computer program that is waiting for a response to a query before it can continue execution of its process.

FIG. 9 illustrates aspects of an example system 900 for implementing aspects in accordance with an embodiment. As will be appreciated, although a web-based system is used for purposes of explanation, different systems may be used, as appropriate, to implement various embodiments. In an embodiment, the system 900 includes an electronic client device 902, which includes any appropriate device operable to send and/or receive requests, messages, or information over an appropriate network 904 and convey information back to a user of the device. Examples of such client devices include personal computers, cellular or other mobile phones, handheld messaging devices, laptop computers, tablet computers, set-top boxes, personal data assistants, embedded computer systems, electronic book readers, and the like. In an embodiment, the network 904 includes any appropriate network, including an intranet, the Internet, a cellular network, a local area network, a satellite network or any other such network and/or combination thereof and components used for such a system depend at least in part upon the type of network and/or system selected. Many protocols and components for communicating via such a network are well known and will not be discussed in detail. In an embodiment, communication over the network 904 is enabled by wired and/or wireless connections and combinations thereof. In an embodiment, the network 904 includes the Internet and/or other publicly addressable communications network, as the system includes a web server 906 for receiving requests and serving content in response thereto, although for other networks an alternative device serving a similar purpose could be used as would be apparent to one of ordinary skill in the art.

In an embodiment, the system includes at least one application server 908 and a data store 910 and it should be understood that there can be several application servers, layers or other elements, processes or components, which may be chained or otherwise configured, which can interact to perform tasks such as obtaining data from an appropriate data store. Servers, in an embodiment, are implemented as hardware devices, virtual computer systems, programming modules being executed on a computer system, and/or other devices configured with hardware and/or software to receive and respond to communications (e.g., web service application programming interface (API requests) over a network). As used, unless otherwise stated or clear from context, the term "data store" refers to any device or combination of devices capable of storing, accessing, and retrieving data, which may include any combination and number of data servers, databases, data storage devices, and data storage media, in any standard, distributed, virtual, or clustered system. Data stores, in an embodiment, communicate with block-level and/or object level interfaces. The application server 908 can include any appropriate hardware, software and firmware for integrating with the data store 910 as needed to execute aspects of one or more applications for the electronic client device 902, handling some or all of the data access and business logic for an application.

In an embodiment, the application server 908 provides access control services in cooperation with the data store 910 and generates content including, but not limited to, text, graphics, audio, video, and/or other content that is provided to a user, associated with the client device by the web server 906 in the form of HyperText Markup Language (HTML), Extensible Markup Language (XML), JavaScript, Cascading Style Sheets (CSS), JavaScript Object Notation (JSON), and/or another appropriate client-side or other structured language. Content transferred to a client device, in an embodiment, is processed by the electronic client device 902 to provide the content in one or more forms including, but not limited to, forms that are perceptible to the user audibly, visually, and/or through other senses. The handling of all requests and responses, as well as the delivery of content between the electronic client device 902 and the application server 908, in an embodiment, is handled by the web server 906 using PHP: Hypertext Preprocessor (PHP), Python, Ruby, Perl, Java, HTML, XML, JSON, and/or another appropriate server-side structured language in this example. In an embodiment, operations described as being performed by a single device are performed collectively by multiple devices that form a distributed and/or virtual system.

The data store 910, in an embodiment, includes several separate data tables, databases, data documents, dynamic data storage schemes, and/or other data storage mechanisms and media for storing data relating to a particular aspect of the present disclosure. In an embodiment, the data store 910 includes mechanisms for storing production data 912 and user information 916, which are used to serve content for the production side. The data store 910 also is shown to include a mechanism for storing log data 914, which is used, in an embodiment, for reporting, computing resource management, analysis, or other such purposes. In an embodiment, other aspects t such as page image information and access rights information (e.g., access control policies or other encodings of permissions) are stored in the data store 910 in any of the above listed mechanisms as appropriate or in additional mechanisms in the data store 910.

The data store 910, in an embodiment, is operable, through logic associated therewith, to receive instructions from the application server 908 and obtain, update, or otherwise process data in response thereto and the application server 908 provides static, dynamic, or a combination of static and dynamic data in response to the received instructions. In an embodiment, dynamic data, such as data used in web logs (blogs), shopping applications, news services, and other such applications are generated by server-side structured languages as described or may be provided by a content management system (CMS) operating on, or under the control of, the application server 908. In an embodiment, a user, through a device operated by the user, submits a search request for a certain type of item. In this example, the data store 910 accesses the user information 916 to verify the identity of the user, accesses the catalog detail information to obtain information about items of that type, and returns the information to the user, such as in a results listing on a web page that the user is views via a browser on the electronic client device 902. Continuing with the example, information for a particular item of interest is viewed in a dedicated page or window of the browser. It should be noted, however, that embodiments of the present disclosure are not necessarily limited to the context of web pages, but are more generally applicable to processing requests in general, where the requests are not necessarily requests for content. Example requests include requests to manage and/or interact with computing resources hosted by the system 900 and/or another system, such as for launching, terminating, deleting, modifying, reading, and/or otherwise accessing such computing resources.

In an embodiment, each server typically will include an operating system that provides executable program instructions for the general administration and operation of that server and includes a computer-readable storage medium (e.g., a hard disk, random access memory, read only memory, etc.) storing instructions that, if executed (i.e., as a result of being executed) by a processor of the server cause or otherwise allow the server to perform its intended functions.

The system, in an embodiment, is a distributed and/or virtual computing system utilizing several computer systems and components that are interconnected via communication links (e.g., transmission control protocol (TCP) connections and/or transport layer security (TLS) or other cryptographically protected communication sessions), using one or more computer networks or direct connections. However, it will be appreciated by those of ordinary skill in the art that such a system could operate in a system having fewer or a greater number of components than are illustrated in FIG. 9. Thus, the depiction of the system 900 in FIG. 9 should be taken as being illustrative in nature and not limiting to the scope of the disclosure.

The various embodiments further can be implemented in a wide variety of operating systems, which in some cases can include one or more user computers, computing devices, or processing devices that can be used to operate any of a number of applications. In an embodiment, user or client devices include any of a number of computers, such as desktop, laptop, or tablet computers running a standard operating system, as well as cellular (mobile), wireless, and handheld devices running mobile software and capable of supporting a number of networking and messaging protocols, and such a system includes a number of workstations running any of a variety of commercially available operating systems and other known applications for purposes such as development and database management. In an embodiment, these devices also include other electronic devices, such as dummy terminals, thin-clients, gaming systems, and other devices capable of communicating via a network, and virtual devices such as virtual machines, hypervisors, software containers utilizing operating-system level virtualization, and other virtual devices or non-virtual devices supporting virtualization capable of communicating via a network.

In an embodiment, the system 900 utilizes at least one network that would be familiar to those skilled in the art for supporting communications using any of a variety of commercially available protocols, such as Transmission Control Protocol/Internet Protocol (TCP/IP), User Datagram Protocol (UDP), protocols operating in various layers of the Open System Interconnection (OSI) model, File Transfer Protocol (FTP), Universal Plug and Play (UpnP), Network File System (NFS), Common Internet File System (CIFS), and other protocols. The network 904, in an embodiment, is a local area network, a wide-area network, a virtual private network, the Internet, an intranet, an extranet, a public switched telephone network, an infrared network, a wireless network, a satellite network, and any combination thereof. In an embodiment, a connection-oriented protocol is used to communicate between network endpoints such that the connection-oriented protocol (sometimes called a connection-based protocol) is capable of transmitting data in an ordered stream. In an embodiment, a connection-oriented protocol can be reliable or unreliable. For example, the TCP protocol is a reliable connection-oriented protocol. Asynchronous Transfer Mode (ATM) and Frame Relay are unreliable connection-oriented protocols. Connection-oriented protocols are in contrast to packet-oriented protocols such as UDP that transmit packets without a guaranteed ordering.

In an embodiment, the system 900 utilizes a web server that runs one or more of a variety of server or mid-tier applications, including Hypertext Transfer Protocol (HTTP) servers, FTP servers, Common Gateway Interface (CGI) servers, data servers, Java servers, Apache servers, and business application servers. In an embodiment, the one or more servers are also capable of executing programs or scripts in response to requests from user devices, such as by executing one or more web applications that are implemented as one or more scripts or programs written in any programming language, such as Java^{®}, C, C# or C++, or any scripting language, such as Ruby, PHP, Perl, Python, or TCL, as well as combinations thereof. In an embodiment, the one or more servers also include database servers, including without limitation those commercially available from Oracle^{®}, Microsoft^{®}, Sybase^{®}, and IBM^{®} as well as open-source servers such as MySQL, Postgres, SQLite, MongoDB, and any other server capable of storing, retrieving, and accessing structured or unstructured data. In an embodiment, a database server includes table-based servers, document-based servers, unstructured servers, relational servers, non-relational servers, or combinations of these and/or other database servers.

In an embodiment, the system 900 includes a variety of data stores and other memory and storage media as discussed above. These can reside in a variety of locations, such as on a storage medium local to (and/or resident in) one or more of the computers or remote from any or all of the computers across the network 904. In an embodiment, the information resides in a storage-area network (SAN) familiar to those skilled in the art, and, similarly, any necessary files for performing the functions attributed to the computers, servers or other network devices are stored locally and/or remotely, as appropriate. In an embodiment where a system includes computerized devices, each such device can include hardware elements that are electrically coupled via a bus, the elements including, for example, at least one central processing unit (CPU or "processor"), at least one input device (e.g., a mouse, keyboard, controller, touch screen, or keypad), and at least one output device (e.g., a display device, printer, or speaker), at least one storage device, such as a disk drive, an optical storage device, or a solid-state storage device such as random access memory (RAM) or read-only memory (ROM), as well as removable media devices, memory cards, flash cards, etc., and various combinations.

In an embodiment, such a device also includes a computer-readable storage media reader, a communications device (e.g., a modem, a network card (wireless or wired), an infrared communication device, etc.), and working memory as described above where the computer-readable storage media reader is connected with, or configured to receive, a computer-readable storage medium, representing remote, local, fixed, and/or removable storage devices as well as storage media for temporarily and/or more permanently containing, storing, transmitting, and retrieving computer-readable information. In an embodiment, system 900 and various devices also typically include a number of software applications, modules, services, or other elements located within at least one working memory device, including an operating system and application programs, such as a client application or web browser. In an embodiment, customized hardware is used and/or particular elements are implemented in hardware, software (including portable software, such as applets), or both. In an embodiment, connections to other computing devices such as network input/output devices are employed.

In an embodiment, storage media and computer readable media for containing code, or portions of code, include any appropriate media known or used in the art, including storage media and communication media, such as, but not limited to, volatile and non-volatile, removable and non-removable media implemented in any method or technology for storage and/or transmission of information such as computer readable instructions, data structures, program modules or other data, including RAM, ROM, Electrically Erasable Programmable Read-Only Memory (EEPROM), flash memory or other memory technology, Compact Disc Read-Only Memory (CD-ROM), digital versatile disk (DVD), or other optical storage, magnetic cassettes, magnetic tape, magnetic disk storage, or other magnetic storage devices or any other medium which can be used to store the desired information and which can be accessed by the system device. Based on the disclosure and teachings provided, a person of ordinary skill in the art will appreciate other ways and/or methods to implement the various embodiments.

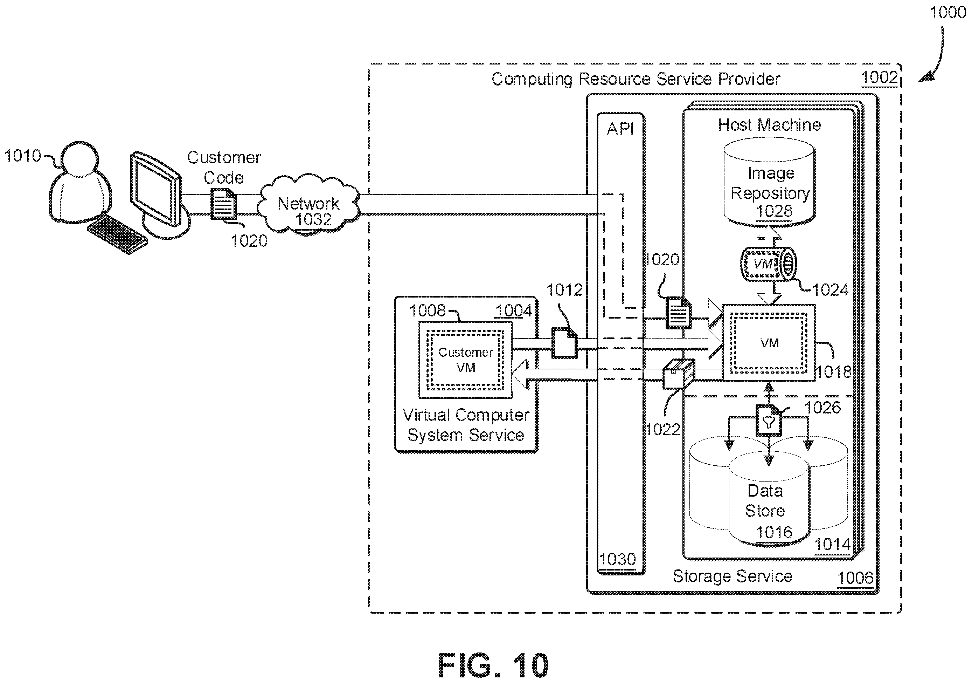

FIG. 10 illustrates an example system 1000 in which various embodiments of the present disclosure may be practiced. As illustrated in FIG. 10, the system 1000 may include customer code 1020 (also referred to herein as "customer-provided software code") provided by customer 1010 via a network 1032. The customer code 1020 can be submitted to an application programming interface 1030 exposed by a storage service 1006 of a computing resource service provider 1002. The customer code 1020 can be executed by a virtual machine 1018 instantiated on a host machine 1014 of the storage service 1006. The virtual machine 1018 may be derived from an image 1024 stored in an image repository 1028. Upon receipt of a request 1012 (e.g., via the application programming interface 1030) by a customer virtual machine 1008 running on behalf of the customer 1010 under a virtual computer system service 1004, the virtual machine 1018 may execute the customer code 1020. Customer code 1020 can be configured to perform, for example, a query 1026 against a data store 1016 of the storage service 1006. A result of the query, data 1022, can then be provided back (e.g., via the application programming interface 1030) to the customer virtual machine 1008 to satisfy the request 1012. The dashed line indicates that, in some embodiments, the data store 1016 is located on the host machine 1014, whereas in other embodiments the data store 1016 may be located at a different computing device from the host machine 1014 that executes the virtual machine 1018.

The computing resource service provider 1002 may be an entity that provides one or more computing resource services to its customers individually or as a combination of services of a distributed computer system. Examples of types of computing resources provided by the computing resource service providers include infrastructure-as-a-service (IaaS), platform-as-a-service (PaaS), and/or software-as-a-service (SaaS). The one or more computing resource services of the computing resource service provider may be accessible to users via a network and may include services such as the virtual computer system service 1004, a block-level data storage service, a cryptography service, an on-demand data storage service such as the storage service 1006, a notification service, an authentication service, a policy management service, a task service, and/or other such services. Not all embodiments described include all of the services described, and additional services may be provided in addition to, or as an alternative to, services explicitly described.

In some examples, a "service" refers to an executing computer application that provides functionality to another computer application. In some examples, a "client" or "client device" refers to a computing system that utilizes the aforementioned service. For example, the customer 1010 may utilize a client to send and receive communications to and from services of the computing resource service provider 1002.

The customer 1010 of the computing resource service provider 1002 may communicate with one or more of the services via an interface (e.g., application programming interface 1030), which may be a web services interface or any other type of customer interface. Each service provided by a computing resource service provider may have its own interface, and subsets of the services may have corresponding individual interfaces in addition to, or as an alternative to, a common interface. The customer 1010 may communicate with the computing resource service provider 1002 through the network 1032. The network 1032 may be a communication network between the customer 1010 and the computing resource service provider 1002. Examples of the network include the Internet, an intranet, an internet service provider (ISP) network, a local area network, a wide area network, Wi-Fi network, or other such network.

The virtual computer system service 1004 may be used by a computing resource service provider to provide virtual computer system resources for the customer 1010. The virtual computer system service may provide such computer system resources by instantiating virtual machine instances, such as the customer virtual machine 1008, on physical hardware. The physical hardware may include physical hosts, which may include any device or equipment configured to execute instructions for performing data computation, manipulation or storage tasks, such as a computer or server similar to the electronic client device 902 or the application server 908 described in conjunction with FIG. 9. In embodiments, the virtual computer system service 1004 may comprise a collection of computer resources, such as the physical hosts, configured to instantiate the customer virtual machine 1008 on behalf of the customer 1010.

The customer 1010 may interact with the virtual computer system service 1004 to provision, place and operate virtual machine instances that are instantiated on physical computer devices hosted and operated by the computing resource service provider. The customer 1010 may communicate with the virtual computer system service 1004 via a different application programming interface from the application programming interface 1030 of the storage service 1006. The virtual machine instances, such as the customer virtual machine 1008, hosted by the virtual computer system service 1004 may be used for various purposes, such as to operate as servers supporting a website, to operate business applications or, generally, to serve as compute power for the customer. Other applications for such virtual machine instances may be to support database applications, electronic commerce applications, business applications and/or other applications.

The storage service 1006 may be an on-demand data storage service that comprises a collection of computing resources configured to synchronously process requests to store and/or access data. The storage service 1006 may allow data to be provided in response to requests for the data using computing resources (e.g., databases) that enable the storage service 1006 to locate and retrieve data quickly. For example, the storage service 1006 may maintain stored data in a manner such that, when a request for a data object is received, the data object can be provided (or streaming of the data object can be initiated) in a response to the request. As noted, data stored in the storage service 1006 may be organized into data objects. The data objects may have arbitrary sizes except perhaps for certain constraints on size. Thus, the storage service 1006 may store numerous data objects of varying sizes. The storage service 1006 may operate as a key value store that associates data objects with identifiers of the data objects which may be used by the customer 1010 to retrieve or perform other operations in connection with the data objects stored by the storage service 1006.

The customer virtual machine 1008 may be a virtual machine instance executing under the virtual computer system service 1004 on behalf of the customer 1010. In some examples, the term "virtual machine" refers to an emulation, in software and/or hardware of a physical computer system, such that software executing in the virtual machine environment behaves as if the virtual machine were a physical computer. The virtual machine may include various virtual computer components, such as one or more virtual processors, virtual memory, or other virtual devices. The virtual processors, virtual memory, and/or other virtual device(s) may emulate a physical analogue while utilizing a share of one or more of the host computing device's physical processors, memory, or other devices to perform respective virtual functions. The virtual machines may be provided to customers of the computing resource service provider 1002 via the virtual computer system service 1004, and the customers may run operating systems, applications and/or other such computer system entities on the virtual machine.

In some examples, the term "virtual machine instance" refers to a virtual machine that is instantiated and executing on a host computer system. The virtual machine instances may be used for various purposes, such as to operate as servers supporting a website, to operate business applications or, generally, to serve as compute power for the customer. Other applications for the virtual machine instances may be to support database applications, electronic commerce applications, business applications and/or other applications.

The customer 1010 may be an individual associated with a customer account of the computing resource service provider 1002, or may be another entity (e.g., individual, device, application, etc.) authorized to act on behalf of the individual associated with the customer account. Furthermore, the resources (e.g., the customer virtual machine 1008) of the customer 1010 may be made available to other users. For example, the customer 1010 may utilize the customer virtual machine 1008 to provide a website accessible to other users; these other users utilize the website to perform various operations (e.g., buy/sell goods or services, upload/download data, stream digital media, etc.). The customer 1010 may communicate with the services of the computing resource service provider 1002 through the network 1032.

The request 1012 may be a request to cause the virtual machine 1018 to perform a query against data of the data store 1016 using the customer code 1020. For example, the request 1012 may include a set of parameter values to pass to the executing customer code as input. The set of parameter values may include information such as one or more of a location (e.g., a Uniform Resource Indicator (URI) of the data in the data store 1016), an identifier of a record, search criteria (e.g., keyword, date/time range, mathematical symbol ("<," ">," "=," etc.), wildcard character (e.g., "*," "?," "%," etc.), etc.), field name, data store name, and so on.

The host machine 1014 may be a device or equipment of one or more such host machines (also referred to as a "fleet" of hosts) of the storage service 1006. The host machine 1014 may be configured to instantiate one or more virtual machine instances. The host machine 1014 may be a computer or server similar to the electronic client device 902 and the application server 908 described in conjunction with FIG. 9. The computing resource service provider 1002 may provide access to the host machine 1014 via the application programming interface 1030. The customer 1010 may interact with the virtual machine 1018 service to execute custom software code to query the data store 1016 of the storage service 1006 operated by the computing resource service provider.

The data store 1016 may be a repository for data objects, such as database records, flat files, and other data objects. Examples of data stores include file systems, relational databases, non-relational databases, object-oriented databases, comma delimited files, and other files. In embodiments, the data store 1016 is a distributed data store in which portions of the data stored in the distributed data store are distributed and/or duplicated across a plurality of storage devices and/or computing devices. In some embodiments, the host machine 1014 is one of the computing devices that stores portions of the data. In other implementations, the host machine 1014 is a separate computing device from the computing devices that store portions of the data.

The customer code 1020 may be a set of computer-executable instructions comprising a computer program (also referred to as an "application") that is executed by a computer system, such as the virtual machine 1018. In embodiments, the customer code 1020 is designed to be executed by a particular system configuration, such as the virtual machine 1018, to perform a query, such as the query 1026, of data in the data store 1016. For example, the customer code 1020 may be designed to decompress a data object that has been stored compressed using a particular file compression format (e.g., gzip, Lempel-Ziv (LZ), LHA, etc.), recompress the data object using a different file compression format, and write the recompressed data object back to the data store 1016. As another example, the customer code 1020 may be designed to update encrypted data to use a new cryptographic key (e.g., key rotation) by reading an encrypted data object from the data store 1016, decrypting the encrypted data object using the old key, re-encrypting the decrypted data object using the new key, and writing the re-encrypted data object back to the data store 1016.

The virtual machine 1018 may be a virtual machine similar to the customer virtual machine 1008, except that the virtual machine 1018 executes on the host machine 1014 of the storage service 106, but is instantiated upon the request 1012 to execute the customer code 1020 and is terminated or paused (depending on the particular embodiment) upon completion of the execution of the customer code 1020. The virtual machine 1018 may be one of one or more virtual machines executing simultaneously on the host machine 1014. In some cases, a plurality of virtual machines similar to the virtual machine 1018 may be executing on the host machine 1014 concurrently on behalf of the customer 1010. Each of the plurality of virtual machines executing on the host machine 1014 may be executing the customer code 1020 or may be executing different customer code.

In some cases, the virtual machine 1018 may be executing on the host machine 1014 concurrently with one or more other virtual machines belonging to another customer. For example, like the host machines that host the customer virtual machine 1008, the host machine 114 may be multi-tenant such that the host machine may allow one or more virtual machines provided to multiple customers by the computing resource service to run concurrently.

The virtual machine 1018 may be specific to the customer 1010 such that the virtual machine 1018 is dedicated to run on behalf of the customer 1010 rather than being usable by more than one customer of the computing resource service provider. The virtual machine 1018 may be constrained to have a specified number of virtual processors and a specified amount of virtual memory, the number and amount of which may vary based on a type of service-level agreement (SLA) that the customer 1010 has with the computing resource service provider 1002.

The virtual machine 1018 may be "isolated" from other virtual machines running on the host such that the virtual machine 1018 may only be authorized to access resources (e.g., data stores, etc.) to which the customer 1010 has access. In some embodiments, virtual machine isolation and/or isolation of the customer code 1020 from other customers may be aided using processor affinity to bind and unbind the virtual machine processes to a designated central processing unit. In this manner, data of one customer is protected against access by another customer or entity. In some embodiments, the virtual machines of the host machine 114 are implemented using hardware virtualization (e.g., Intel VT-x, Intel APICv, AMD-V, AMD AVIC, Via VT, etc.).

In some examples, "multitenancy" or "multi-tenant" refers to multiple customers of the computing resource service provider 1002 running separate virtual machines concurrently on the same host machine. For example, each host machine may run a virtualization layer such as a hypervisor or virtual machine manager that enables the physical hardware of a host computing system to be used to provide computational resources upon which one or more virtual machines may operate. The virtualization layer may be any device, software or firmware used for providing a virtual computer platform for the virtual machines. In some embodiments, the virtualization layer is a kernel-based virtual machine (KVM) infrastructure for a Linux kernel. Thus, the host machine 1014 may be executing the virtual machine 1018 concurrently with one or more other virtual machines that correspond to other customers of the computing resource service provider 1002.

The image 1024 is a snapshot of the state of a virtual machine 1018 at a particular point in time. The image 1024 is utilized to restore the system to the state it was at the particular point in time. In the example illustrated in FIG. 10, the virtual machine 1018 is launched from the image 1024 retrieved from the image repository 1028.

The query 1026 may be an operation performed with data stored in the data store 1016 initiated by execution of the customer code 1020. Note that the query 1026 may be one or more queries performed by execution of the customer code 1020. For example, the customer code 1020 may be designed to read a data object from the data store 1016, modify the data object, write the modified data object back to the data store, read another data object from the data store 1016, and so on. Thus, query 1026 may represent any operation that may be performed with data in the data store 1016, such as reading, writing, inserting, deleting, etc.

The data 1022 may be the result of the query 1026. Depending on the type of query, in some cases the data 1022 may be an acknowledgement of queried-for data being either present in or absent from the data store 1016. In other cases, the query 1026 may have been a fetch (also referred to as "get") query, in which case the data 1022 may be the data fetched from the data store 1016 as a result of successful execution of the query 1026. In other examples, execution of the customer code 1020, in addition to performing the query 1026, may modify data retrieved from the data store 1016; for example, the execution of the customer code 1020 may redact or otherwise omit sensitive information from the results of the query 1026 from the data 1022, such as by replacing social security numbers with "xxx-xx-xxxx."

The image repository 1028 may be a data store storing one or more images of different virtual machine configurations, such as the image 1024. In some embodiments, the image repository 1028 is located on the same host machine that hosts the virtual machine 1018. In other embodiments the image may be located on a separate device.

In some embodiments, the services provided by a computing resource service provider may include one or more interfaces, such as the application programming interface 1030, that enable the customer to submit requests via, for example, appropriately configured application programming interface (API) calls to the various services. The application programming interface 1030 may be a set of subroutine definitions, communication protocols, and/or software tools that provide a method of communication with components of the storage service 1006. In addition, each of the services may include one or more service interfaces that enable the services to access each other (e.g., to enable the customer virtual machine 1008 of the virtual computer system service 1004 to store data in or retrieve data from the storage service 1006 and/or access one or more block-level data storage devices provided by a block-level data storage service). Each of the service interfaces may also provide secured and/or protected access to each other via encryption keys and/or other such secured and/or protected access methods, thereby enabling secure and/or protected access between them. Collections of services operating in concert as a distributed computer system may have a single front-end interface and/or multiple interfaces between the elements of the distributed computer system.

Embodiments of the present disclosure may be particularly advantageous where the size (e.g., in bytes) of the set of executable software instructions is smaller than the data being accessed because less data may need to be transmitted over a network. Take for example, 20 kilobytes of executable software instructions that can be utilized to read, search through, and/or modify 5 gigabytes of data stored in the data store 1016. If the 20 kilobytes of executable software instructions are executed at the virtual computer system service 1004, the 5 gigabytes of data may need to be transmitted between the storage service 1006 to customer virtual machine 1008 of the virtual computer system service 1004 over a network (e.g., local area network), thereby taking up bandwidth that could be used for other customers of the computing resource service provider 1002. Alternatively, if the 20 kilobytes of data are transmitted from the customer virtual machine 1008 to storage service 1006, where they are executed by the host machine 1014 that hosts the data store 1016, the 5 gigabytes of data need only be transmitted between internal buses of the host machine 0 itself, which may be much faster than having to transmit the data to the customer virtual machine 1008 and may conserve internal network bandwidth for other customers of the computing resource service provider 1002.

As an illustrative example of a workflow for the system 1000 of FIG. 10, the customer 1010 may provide the computing resource service provider 1002 with the customer code 1020 that submits a query to obtain a data object from the data store 1016. In the illustrative example, the customer 1010 also has the customer virtual machine 1008, which hosts a website that, based on input of a user of the website, submits the request 1012 to the storage service 1006 to execute the customer code 1020. For example, the request 1012 may be to obtain a data object associated with the user (e.g., profile information, account settings, etc.). In the illustrative example, upon receiving the request 1012, the storage service 1006 selects the host machine 1014 and sends a command to cause the host machine 1014 to instantiate the virtual machine 1018 to execute the customer code 1020, thereby causing the data 1022 to be obtained from the data store 1016. Then, in the illustrative example, the storage service 1006 provides the data 1022 back to the customer virtual machine 1008 that submitted the request 1012.

An example use case may be that the customer 1010 has access to a large amount of images stored in the data store 1016 and may be utilizing the customer virtual machine 1008 to perform a machine learning algorithm to recognize certain objects within the images (e.g., a blue car). However, rather than transmitting each image from the data store 1016 to the customer virtual machine 1008, the customer 1010 provides the customer code 1020 that performs an initial screen of the images. For example, the customer virtual machine 1008 may send the request 1012 to retrieve images which may cause the customer code 1020 to be executed on the host machine 1014 and retrieve each of the customer images from the data store 1016 and only transmitting images back to the customer virtual machine 1008 that meet the screening criteria (e.g., rejecting images that do not contain more than a certain number of blue pixels).

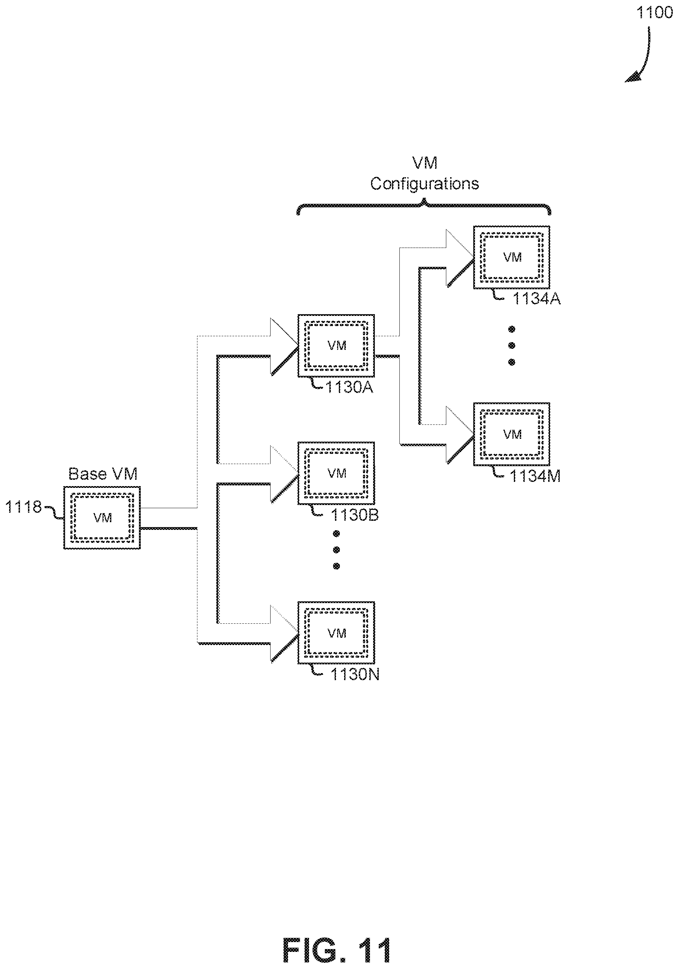

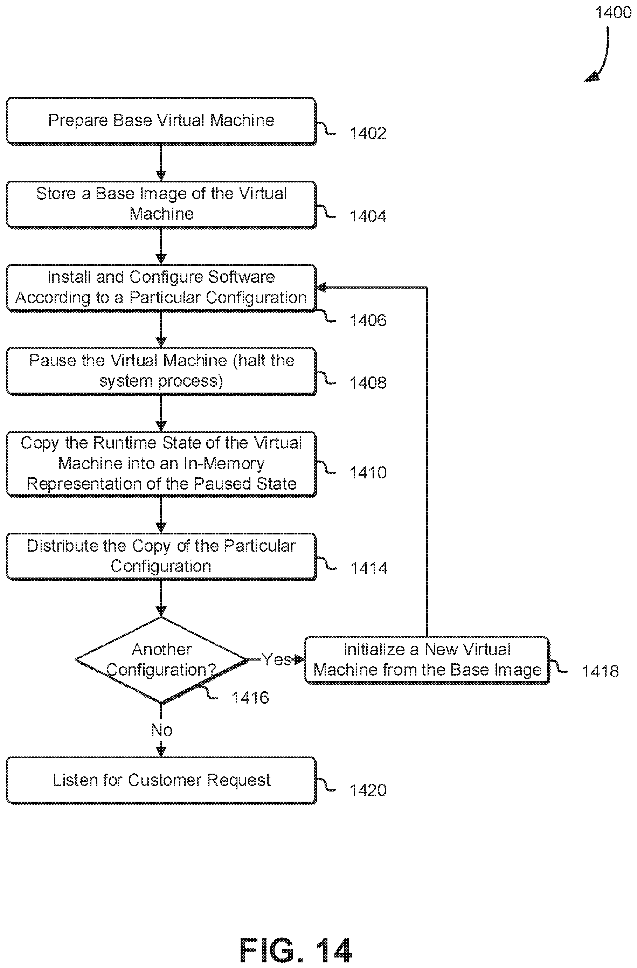

FIG. 11 illustrates an example 1100 of an embodiment of the present disclosure. Specifically, FIG. 11 depicts a base virtual machine 1118 that is used in the creation of particular virtual machine configurations 1130A-1130N and the particular derived virtual machine configurations 1134A-1134M as described in reference to FIG. 14. The base virtual machine 1118 may comprise a hardware virtualized state that has been booted up with a kernel and paused in a state ready to be configured with an operating system and/other applications and libraries. The base virtual machine 1118 may be stored as a snapshot image in the paused state and restored as many times as is needed to configure the particular virtual machine configurations 1130A-1130N. In some embodiments, the base virtual machine 1118 may be common to multiple or all customers of a computing resource service provider. In some embodiments, customers of the computing resource service provider may be provided with individual base virtual machines of their own by the computing resource service provider.

The particular virtual machine configurations 1130A-1130N may each be derived from the base virtual machine 1118. For example, for each of the particular virtual machine configurations 1130A-1130N, a virtual machine may be instantiated from the snapshot image of the base virtual machine 1118, an operating system may be installed to the virtual machine and any software (e.g., command interpreters, code libraries, etc.) needed to execute a particular set of executable software instructions as described in the present disclosure may be installed. Each of the particular virtual machine configurations 1130A-1130N may be paused the particular virtual machine configuration reaches a stable state. In some examples, a "stable state" refers to a state of execution of the virtual machine whereby the software (e.g., operating system, compiler, etc.) needed to execute the particular set of executable software instructions is launched to the point of being ready/able to receive and execute a set of executable software instructions (e.g., the customer code 1020) to execute (referred to as a "stable state" in the present disclosure). For example, for a particular virtual machine configuration 1130A, a virtual machine may be instantiated from the base virtual machine 1118 and a set of software applications (e.g., a RedHat Linux operating system, a Python command interpreter, an application programming interface configured to receive a set of software instructions and provide the set of software instructions to the Python, and other software for the particular configuration) may be installed and executed on the launched virtual machine. At a point in time when the set of software applications are ready/able to receive and execute the set of software instructions, the virtual machine of the present disclosure may be said to be in a stable state at that particular point in time.

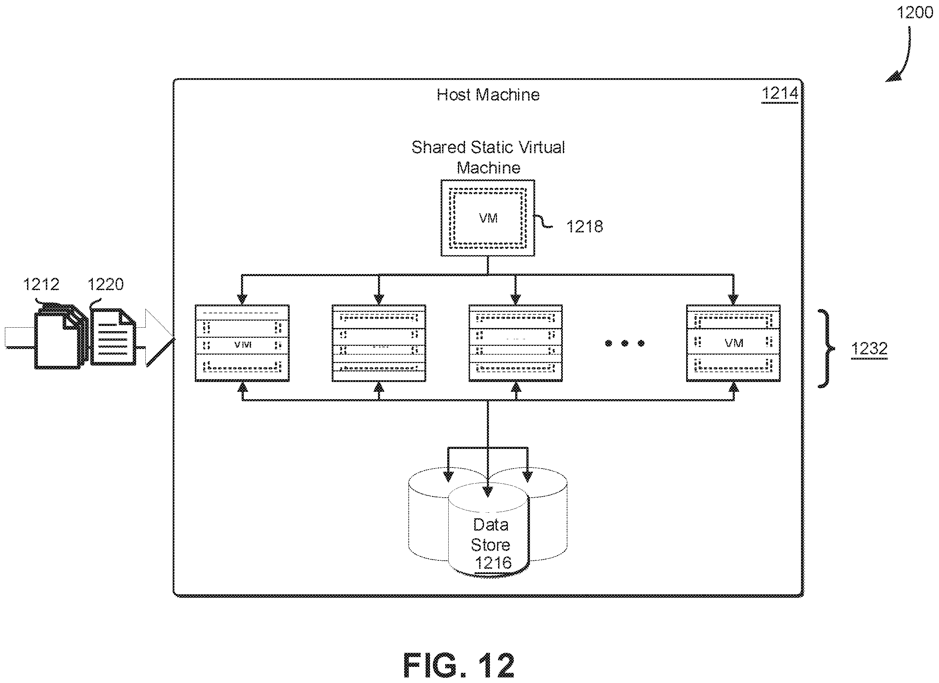

The state of each of the particular virtual machine configurations may be stored and distributed to one or more host machines of the computing resource service provider, whereupon each of the particular virtual machine configurations may be instantiated (e.g., the shared static particular virtual machine configuration 1218 of FIG. 12) to execute a set of executable software instructions. In some examples, a "clone" refers to a state of a particular virtual machine that has been distributed/copied to the one or more host machines. A plurality of such clones, consequently, may each be instantiated, consecutively or concurrently, to begin execution from the (same) state of the particular virtual machine configuration.

The derived particular virtual machine configurations 1134A-1134M are presented to illustrate that further virtual machine configurations may be derived from a particular virtual machine configuration; in this illustrative case, the particular virtual machine configuration 1130A. For example, the particular virtual machine configuration 1130A may be a virtual machine configured with a Linux operating system capable of executing standard Python software code. The derived particular virtual machine configuration 1134A may be Linux capable of executing Python software code with the addition of support for Python cryptographic libraries, the derived particular virtual machine configuration 1134M may be Linux capable of executing Python software code as well as capable of executing C software code, and so on. Thus, the virtual machine configurations may be derived from other virtual machine configurations, all descending from the base virtual machine 1118.

In embodiments, the particular virtual machine configurations 1130A-1130N and 1134A-1134M derived from the base virtual machine '1118 may be stored as their set of differences from the base virtual machine 1118 and/or parent virtual machine. In this manner, the particular virtual machine configurations 1130A-1130N and 1134A-1134M may be recreated by applying the differences (delta) to the base virtual machine 1118. In this manner, memory and other storage resources may be conserved because the system of the present disclosure need not store an entire virtual machine image for the particular virtual machine configurations 1130A-1130N and 1134A-1134M, only their differences from the base virtual machine 1118.

FIG. 12 illustrates an aspect of a system 1200 in which an embodiment may be practiced. Specifically, FIG. 12 illustrates the copy-on-write (CoW) aspect of certain embodiments of the present disclosure that provides a benefit of being able to quickly and efficiently instantiate running clone virtual machines 1232 while making efficient usage of memory resources. In FIG. 12, the shared static particular virtual machine configuration 1218 may be used to instantiate any number of the running clone virtual machines 1232 at the state of the shared static particular virtual machine configuration 1218.

The shared static particular virtual machine configuration 1218 may be an instantiation of an in-memory representation of a particular virtual machine configuration (as described in the present disclosure) at a state (e.g., memory content, processor registers, etc.) at which it was paused. In some embodiments, the shared static particular virtual machine configuration 1218 is built from a base image and a delta from the base image that corresponds to a particular virtual machine configuration. In other embodiments, the shared static particular virtual machine configuration 1218 is loaded from a single particular virtual machine configuration image.

For example, a computing resource service provider such as the computing resource service provider 1002 of FIG. 10 may have a number of stored particular virtual machine configurations as deltas along with a corresponding base image or as entire images available (e.g., the virtual machine 1018) for selection by its customers to use for executing sets of executable software instructions, such as the set of executable software instructions 1220. The computing resource service provider may distribute the particular virtual machine configurations to one or more host machines of a data storage service of the computing resource service provider. Upon receiving a request from a customer of the data storage service, such as the customer 1010, to execute the set of executable software instructions 1220, the host machine 1214 may read (from local persistent storage) the shared static particular virtual machine configuration 1218 into CoW pages of memory. Note that if the shared static particular virtual machine configuration 1218 is already in memory, this operation may not need to be performed. In some embodiments, the shared static particular virtual machine configuration 1218 may be pre-loaded in volatile memory in anticipation of receiving a request to instantiate the running clone virtual machines 1232 to execute the set of executable software instructions 1220.

The shared static particular virtual machine configuration 1218, once in CoW memory, may be used to launch one or more running clone virtual machines 1232 to execute the set of executable software instructions 1220. In some examples, "copy-on-write" refers to a technique of making data read-only ("static") until a modification (e.g., "write") to the data is made. The modified data is then "copied" to a read-write location, and a subsequent read/write operation to the modified data may be performed to the modified data at the read-write location. In this manner, the running clone virtual machines 1232 can share and utilize the shared static particular virtual machine configuration 1218 in read-only memory for their instance except for portions they write to, which may be copied to a separate read-write memory space specific to that running clone virtual machine. Hence, the running clone virtual machines 1232 are depicted in FIG. 12 as partial representations of virtual machines. By sharing the shared static particular virtual machine configuration 1218 in this way, memory of the host machine 1214 may be utilized more efficiently because additional memory may be allocated only to data that is modified from the original of the shared static particular virtual machine configuration. In some embodiments, a Kernel-based Virtual Machine (KVM) shared memory technique of VirtIO is used to allow reads and writes to be performed in and out of the hypervised virtual machine.

The running clone virtual machines 1232 may be N-number of virtual machines instantiated from the shared static particular virtual machine configuration 1218 to execute the set of executable software instructions 1220.Once a clone of a particular virtual machine configuration is instantiated, its state may diverge from other instantiated clones of the same particular virtual machine configuration; consequently, such instantiated clones may be referred to herein as "running clones." In some embodiments, the shared static particular virtual machine configuration and the running clone virtual machines 1232 may be instantiated on behalf of a single customer, such as the customer 1010 of FIG. 10. However, because the shared static particular virtual machine configuration 1218 may be CoW, the shared static particular virtual machine configuration 1218 may be shared among running clone virtual machines 1232 of different customers without risk of compromising customer data because the read-write portions of memory allocated to the running clone virtual machines 1232 may be isolated from each other. Thus, each of the customers may provide different sets of executable software instructions to their respective running clone virtual machines while still sharing the shared static particular virtual machine configuration 1218. Furthermore, the running clone virtual machines 1232 may each be provided (e.g., by the host machine 1214) with a copy of the set of executable software instructions 1220 ready to be executed upon request (e.g., upon receiving the set of parameter values 1212). In this manner, delay between a request to execute the set of executable software instructions 1220 and execution may be reduced because the running clone virtual machines 1232 are already standing by to execute the set of executable software instructions 1220. In some embodiments, rather than the shared static particular virtual machine configuration 1218, the base image may be loaded into CoW pages as a static base image, and the deltas containing the differences from the base image particular to the particular virtual machine configurations may be loaded into non-CoW to create the running clone virtual machines 1232.

The host machine 1214 may be a physical computing system configured to instantiate and run virtual machines on behalf of another entity, such as the customer 1010 of FIG. 10, similar to the host machine 1014. As noted, the host machine 1214 may be multi-tenant such that the running clone virtual machines 1232 may be associated with multiple customers of the computing resource service provider that manages the host machine 1214 or other authorized entities.

The data store 1216 may be a data store similar to the data store 1016 of FIG. 10. In some implementations, the data store 1016 may be a member of a distributed data store that stores data of the customer associated with the running clone virtual machines 1232 (e.g., the customer 1010 of FIG. 10). For example, the data of the customer may be distributed among multiple data stores of multiple host machines of a data storage service. In some embodiments, at least a portion of the data of the customer may be stored locally on the host machine 1214 while other portions of the customer's data may be stored on different host machines of the data storage service. Thus, in such embodiments, execution of the set of executable software instructions 1220 by the running clone virtual machines 1232 may access the data store 1216 for the portions of the data stored locally, but may access the data store of a different host machine for portions of the data of the customer stored with the different host machine.

Note, however, that although embodiments of the present disclosure are described as running on the host machine 1214 of a storage service, it is contemplated that techniques described in the present disclosure may be applied to quickly and efficiently execute the set of executable software instruction 1220 in the running clone virtual machines 1232 on the host machine 1214 of other services provided by a computing resource service provider. For example, using the static particular virtual machine configuration 1218 in CoW pages of memory, one or more of the running clone virtual machines 1232 may be instantiated within a couple of milliseconds or less using the shared static particular virtual machine configuration 1218 in a virtual computer system service. Moreover, once each of the running clone virtual machines 1232 completes its task, it may be quickly terminated and its respective modified memory pages may be wiped/erased (e.g., overwritten with zeroes), deallocated from its assigned clone virtual machine, and re-used for other purposes. In this manner, embodiments of the present disclosure may allow a customer to cause the set of executable software instructions 1220 to be quickly executed and exit, freeing resources (e.g., memory space, processor capacity, etc.) to allow other customers to share either or both the host machine 1214 and the shared static particular virtual machine configuration 1218 for executing their own sets of executable software instructions.

In some embodiments, as noted above, upon completion of execution of the set of executable software instructions 1220, the running clone virtual machines 1232 may be paused and/or stored. Upon a subsequent request to execute the set of executable software instructions 1220, the paused running clone virtual machines may be unpaused and caused to re-execute the set of executable software instructions 1220.

The set of executable software instructions 1220 may be executable program code similar to the customer code 1020 of FIG. 10. In embodiments, the set of executable software instructions 1220 may be provided to the computing resource service provider that hosts the host machine 1214 by the customer associated with the running clone virtual machines 1232. In other implementations, the computing resource service provider may provide pre-approved sets of executable instructions for selection by its customers to execute in the running clone virtual machines 1232. In some implementations, the set of executable software instructions 1220 may be accompanied by, or may be configured to receive upon being executed, a set of parameter values 1212.

The set of parameter values 1212 may be a set of values passed by the customer as input to the executing set of executable software instructions 1220. The set of parameter values may be similar to the values passed in the request 1012 of FIG. 10. For example, the set of parameter values may include search criteria, filtering criteria, values that specify how to modify customer data, or any other parameter value as the set of executable software instructions 1220 would be designed to receive. Note that each of the running clone virtual machines 1232 may receive the same or different parameter values. For example, a first running clone virtual machine may receive parameter values indicating to search through a set of data for last names that start with the letter "A," while a second running clone virtual machine may receive parameter values indicating to search through the set of data for last names that start with the letter "B," and so on.

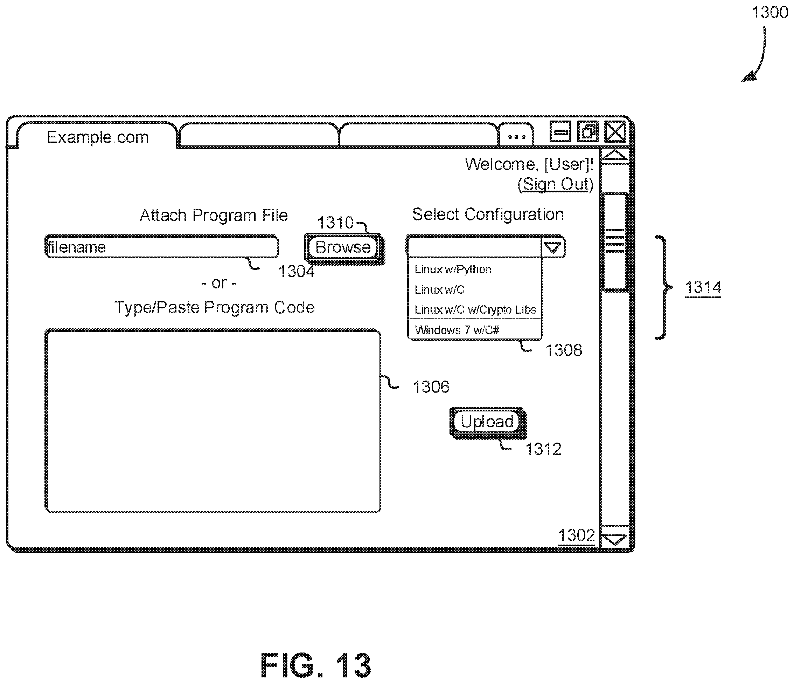

FIG. 13 illustrates an example interface 1300 of an embodiment of the present disclosure. As illustrated in FIG. 13, the example interface 1300 may include a web page 1302 that includes a number of form fields for inputting or selecting software code for executing in clone virtual machine instances and/or one or more particular virtual machine configurations for the running clone virtual machine instances.

The web page 1302 may comprise content rendered to a display device via a software application, such as a web browser, executing on a client device (e.g., the electronic client device 902 of FIG. 9) of a customer of a computing resource service provider. The web page 1302 may be fetched from a remote computing device (e.g., the web server 906) of the computing resource service provider. The web page 1302 may include dynamically generated content and/or static content from one or more files of the computing resource service provider. The content may be derived from one or more markup languages, such as Hypertext Markup Language (HTML), Cascading Style Sheets (CSS), JavaScript, Perl, and so on. The web page may include a set of form elements and/or graphical elements, such as textboxes, radio buttons, checkboxes, dropdown lists, multi-select lists, images, animations, and so on, some of which may be described below.

The filename field 1304 may be a form element for specifying a location (e.g., local or network location) of a file containing a set of executable software instructions to be executed in a clone virtual machine such as the running clone virtual machines 1232 described in conjunction with FIG. 12. The filename field 1304 may be associated with a browse button 1310 that prompts the client device with a window to allow the customer to browse a local and/or network location for the file containing the set of executable software instructions. The code textbox 1306 may be a form field element that allows the customer to type the set of executable software instructions into the box or to "paste" the set of executable software instructions into the box.

The configuration dropdown 1308 may be a form field element that lists the virtual machine configurations 1314 for selection by the customer to execute the set of executable software instructions. The particular virtual machine configuration selected from the configuration dropdown 1308 may correspond to the shared static particular virtual machine configuration 1218 of FIG. 12.

The virtual machine configurations 1314 may represent a set of virtual machine images paused at a particular state and stored by the computing resource service provider, the virtual machine images of the set having been pre-configured and made available to customers by the computing resource service provider for use in instantiating virtual machines on behalf of customers of the computing resource service provider. Selection and submission of a virtual machine configuration from the configuration dropdown 1308 may cause the computing resource service provider to distribute one or more copies of the virtual machine image that corresponds to the selection to one or more host machines. The virtual machine configurations 1314 may be configured to have the required resources and/or software to support executing software code. For example, the customer may paste executable software code written in Python in the code textbox 1306 and select "Linux w/Python" from the configuration dropdown in order to cause the executable software code to be executed by a Linux virtual machine configuration capable of executing the Python executable software code.

The upload button 1312 may be a form element that submits the form field values of the web page 1302 to the computing resource service provider, such as via the web server 906 of FIG. 9. For example, clicking the upload button 1312 may cause the source code of the set of executable software instructions, input either via the code textbox 1306 or by indicating a file location via the filename field 1304, and the virtual machine configuration selected from the configuration dropdown 1308 to the web server 906 of the computing resource service provider.

Note that the example interface 1300 is intended to be illustrative, and it is contemplated that different embodiments may have various types of interfaces for performing similar functions. The different embodiments may include more, less, or different form elements from those depicted in FIG. 13.

A separate interface may be used by the customer of the computing resource service provider to request that the software code provided via the example interface 1300 be executed. In some implementations, the separate interface may additionally include form elements for specifying parameters to be provided to the executing software code as input. In some implementations, the separate interface may include a form element for specifying the number of clone virtual machines to instantiate to concurrently run the software code. In other implementations, the number of clone virtual machines may be determined by the host machine hosting the clone virtual machines based on the parameters (e.g., if the parameters contain multiple search criteria separated by a separator character, such as a comma or semicolon, the host machine may split the search criteria based on the separator character and instantiate a separate clone virtual machine to execute a search for each of the search criteria).

FIG. 14 is a flowchart illustrating an example of a process 1400 for creating and distributing particular virtual machine configurations in accordance with various embodiments. Some or all of the process 1400 (or any other processes described, or variations and/or combinations of those processes) may be performed under the control of one or more computer systems configured with executable instructions and/or other data, and may be implemented as executable instructions executing collectively on one or more processors. The executable instructions and/or other data may be stored on a non-transitory computer-readable storage medium (e.g., a computer program persistently stored on magnetic, optical, or flash media).

For example, some or all of process 1400 may be performed by any suitable system, such as a server in a data center, by various components of the system 900 described in conjunction with FIG. 9, such as the web server 906 or the application server 908, by multiple computing devices in a distributed system of a computing resource service provider, or by any electronic client device such as the electronic client device 902. The process 1400 includes a series of operations wherein a base virtual machine is prepared and an image of the base virtual machine is stored, a set of virtual machine configurations is created and stored based on the base virtual machine, the runtime states of the virtual machine configurations are distributed as clones of the particular virtual machine to be instantiated in response to a customer request to execute specified code under a particular virtual machine configuration.

In 1402, the system performing the process 1400 may instantiate a base virtual machine on a local host. In some implementations, the base virtual machine may include an emulation of the hardware of a physical computer system but may not include software, such as an operating system. In other implementations, the base virtual machine may include an operating system and/or additional software that will be common to the configurations described in the present disclosure. In some implementations, there may be multiple base virtual machines (e.g., for different operating systems) as anticipated. For example, in an implementation there may be a RedHat Linux base virtual machine and a Windows base virtual machine. In 1404, the system performing the process 1400 may store a snapshot of the base virtual machine image. In this manner, a new virtual machine instance may be instantiated to the state of the base virtual machine image and installed with software according to a particular virtual machine configuration for as many particular virtual machine configurations as are anticipated for use in executing software code in a storage service, such as the storage service 1006 of FIG. 10.

In 1406-18, particular virtual machine configurations may be created. Note that the operations of 1406-18 may be repeated for each particular virtual machine configuration to be made available to execute customer software code. For example, in 1406, particular software may be installed to the base virtual machine image to create a particular virtual machine configuration; e.g., the base virtual machine image may be installed with a particular operating system (e.g., any one of a variety of Linux distributions or Windows versions) and configured to support execution of software code written in one or more different languages (e.g., Python, Perl, C, C++, C#, Go, Node.js, etc.). As an illustrative example, a particular virtual machine configuration may be installed with Ubuntu Linux and a Python command interpreter for use in executing customer Python code, another particular virtual machine configuration may be installed with a Windows operating system and configured to execute Perl and C code, and yet another particular virtual machine configuration may be installed with RedHat Linux and designed to execute C code using cryptographic C libraries. In 1408, the system performing the process 1400 may pause the particular virtual machine configuration, such as by halting the system processes of the particular virtual machine.

In 1410, the system performing the process 1400 may copy the runtime state of the paused particular virtual machine configuration into an in-memory representation of that paused state (e.g., memory contents, state of processor registers, etc.). In some examples, "runtime" refers to the time during which a software program (e.g., executable software instructions) is executing. In some examples, a "runtime state" refers to a state of execution of that software program at a point in time. Thus, in some examples, the runtime state of a virtual machine refers to the state of execution of the virtual machine (e.g., virtual memory contents, state of registers of the virtual processor(s), etc.) at the point in time (e.g., the particular point in time at which the particular virtual machine was paused). The system may then store the in-memory representation of the state of the particular virtual machine to persistent storage such that the stored in-memory representation may be used as a source for "cloning" the paused particular virtual machine configuration's state to one or more host machines. In some examples, "cloning" refers to instantiating one or more virtual machine from a CoW copy of the particular virtual machine configuration. The one or more host machines may utilize the running clone particular virtual machine configuration to start a new system process with the same state as the original paused particular virtual machine configuration (e.g., such that the halted virtual machine configuration may be restored to the state it was at the particular point in time it was halted).

In some implementations, the stored state may be a snapshot of the halted virtual machine configuration. In other implementations, the stored state may be the differences, or deltas (Δs), between a snapshot of the halted virtual machine and the base virtual machine image such that the base virtual machine image may be instantiated and the Δ applied to the instantiated base machine to result in the particular virtual machine configuration at the state it was at the point in time it was halted. Note that there are a variety of ways of determining the Δ between the halted virtual machine configuration and the base virtual machine. In one example, a memory compare between the memory pages of the base virtual machine and the halted virtual machine configuration may be compared to identify the memory pages that have been modified from the state of the base virtual machine ("dirty pages"). In another example, memory pages of the particular virtual machine configuration are monitored from the host operating system and the memory pages that have changed are identified. These changes may be copied to a file representing the Δ from the base virtual machine image.

In 1414, the system performing the process 1400 may distribute/copy the file representing the state of the particular virtual machine configuration at the time it was halted (e.g., snapshot, Δ, etc.) to one or more host machines of a storage service, such as the host machine 1014 of the storage service 1006 of FIG. 10. The copied states of the particular virtual machine configuration at the time it was halted may be referred to as clones of the particular virtual machine. In some embodiments, the one or more host machines may load the particular virtual machine configuration into CoW pages of memory, as described in conjunction with FIG. 12, such that running clones (e.g., the running clone virtual machines 1232) of the cloned particular virtual machine configuration (e.g., the static particular virtual machine configuration 1218) may be instantiated efficiently upon receipt of a request to execute customer code to the state the particular virtual machine configuration was in at the point at which it was halted. In embodiment where the file is a Δ between the particular virtual machine configuration and the base virtual machine, each of the host machines may also have a copy of the base virtual machine image such that any of the host machines may instantiate the particular virtual machine configuration by applying the Δ to an instantiation of the base virtual machine. In some embodiments, the system performing the process 1400 may itself be one of the host machines of the storage service.

In 1416, the system performing the process 1400 may determine whether another particular virtual machine configuration is to be created in anticipation of executing customer code under the particular virtual machine configuration. For example, the system may receive a selection of a set of configurations from a system administrator or other authorized entity of a data storage service and the system may perform the operations of 1406-18 for each of the configurations specified in the set, and determine that no other configurations remain when the operations have performed for each configuration in the set. As another example, the system may perform the operations of 1406-18 based on historical usage data; for example, the system may determine the top five most popular configurations used by customers of the computing resource service provider to perform queries against data stores of the data storage service based on historical data (e.g., logs, usage records, etc.) and perform the operations of 1406-18 to create particular virtual machine configurations for each of those popular configurations. If further particular virtual machine configurations are anticipated, the system performing the process may proceed to 1418. Otherwise, if no further particular virtual machine configurations are anticipated, the system may proceed to 1420.

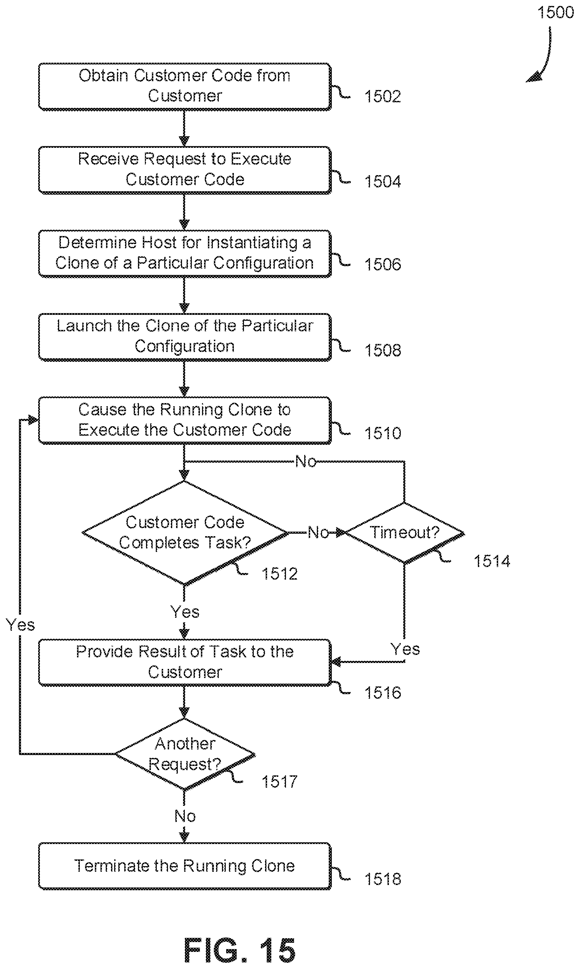

**In** 1418, the system performing the process 1400 may instantiate a new virtual machine based on the base virtual machine image in order to have a "clean" virtual machine upon which to install and configure the next particular software configuration in 1406. The system next returns to 1406 to install and configure the next particular software configuration. **In** 1420, the system performing the process 1400 may wait to receive a request from a customer of the computing resource service provider to execute a set of executable software instructions under one of the particular virtual machine configurations created in 1406-18. Upon receiving such a request, the system may perform the process 1500 of FIG. 15 (e.g., at 1504). Note that one or more of the operations performed in 1402-20 may be performed in various orders and combinations, including in parallel.

FIG. 15 is a flowchart illustrating an example of a process 1500 for executing customer code within a data storage service in accordance with various embodiments. Some or all of the process 1500 (or any other processes described, or variations and/or combinations of those processes) may be performed under the control of one or more computer systems configured with executable instructions and/or other data, and may be implemented as executable instructions executing collectively on one or more processors. The executable instructions and/or other data may be stored on a non-transitory computer-readable storage medium (e.g., a computer program persistently stored on magnetic, optical, or flash media).

For example, some or all of process 1500 may be performed by any suitable system, such as a server in a data center, by various components of the system 900 described in conjunction with FIG. 9, such as the web server 906 or the application server 908, by multiple computing devices in a distributed system of a computing resource service provider, or by any electronic client device such as the electronic client device 902. The process 1500 includes a series of operations wherein a customer of a computing resource service provider that provides data storage services to the customer provides a set of executable software instructions or selects a set of executable software instructions from a list, the customer requests the code to be executed, a particular virtual machine configuration appropriate to (e.g., capable of executing) the set of executable software instructions is instantiated and caused to execute the set of executable software instructions, and the result of the execution is provided to the customer.

In 1502, the system performing the process 1500 may obtain a set of executable software instructions (also referred to as "customer code" in the present disclosure) to be executed upon request from a customer of the computing resource service provider that hosts the system. In some embodiments, the customer provides the set of executable software instructions (e.g., via an application programming interface, such as the application programming interface 1030 of FIG. 10) to be executed. In other implementations, the computing resource service provider may offer for selection to the customer, sets of executable software instructions; the customer may select from the sets a particular set of executable software instructions to be executed. In some embodiments, such as where the set of executable software instructions is stored in a file accessible to the one or more host machines upon which it is to be executed or where the customer selects the set of executable software instructions from sets made available by the computing resource service provider, the system may receive a reference (e.g., an identifier or location) to the set of executable software instructions and may locate and obtain the set of executable software instructions based on that reference. In some cases, the set of executable software instructions includes indications as to which data of the customer the set of executable instructions are to access and/or where in the data storage service the data is located.

In various implementations, the set of executable software instructions may be configured to receive, as input, one or more parameter values that may be included in the request to execute the customer code in 1504. The customer may specify the one or more parameter values in the request to execute the set of executable software instructions. The set of executable software instructions may be stored in association with the customer in anticipation of a customer request to execute the set of software instructions in 1504.

In 1504, the system performing the process 1500 may receive a request from the customer to execute the set of software instructions. In some implementations, the set of executable software instructions obtained from the customer in 1502 is received together with the request to execute said set of executable software instructions. In some implementations, the request includes one or more parameter values to pass as input to the set of executable software instructions. For example, the set of executable software instructions may be configured to, upon execution, execute a query against data to locate data objects that match the one or more parameters (e.g., keywords, identifiers, date range, data object size, etc.). In some implementations, the customer may direct the system to execute a number of instances of the set of executable software instructions (e.g., running in parallel as a batch). For example, the customer may desire to perform multiple simultaneous queries against the customer's data, which may be duplicated and distributed among one or more hosts of the data storage service. In such a case, the system may determine to instantiate multiple virtual machine instances on the one or more hosts to execute the sets of executable software instructions to perform the queries in parallel as directed by the customer.

In 1506, the system performing the process may determine a host of a data storage service, such as the host machine 1014 of the storage service 1006 of FIG. 10, upon which to instantiate a particular virtual machine configuration to execute the set of executable software instructions specified by the customer. In some implementations, the host upon which the particular virtual machine configuration is determined to be instantiated will be a host that is proximate to the data of the customer. For example, the system may determine which servers among a plurality of servers hosting data for customers of the computing resource service provider are hosting the data of the customer that submitted the request in 1504, and the system may select the host or hosts from among the servers hosting the data of the customer. In some implementations, the customer may be associated with multiple sets of data, and the system may determine, based on the request and/or the set of executable software instructions, which of the multiple sets of data will be accessed (e.g., read from, written to, etc.) upon execution of the set of executable software instructions, and the system may select a host or hosts from among the servers that host that data.

In 1508, the system performing the process 1500 may cause the host or hosts determined in 1506 to launch one or more clone virtual machine instances of the particular virtual machine configuration that is appropriate to the set of executable software instructions. The appropriate particular virtual machine configuration may be a particular virtual machine configuration that is specified by the customer in the operations of 1502 or 1504 as being capable of executing the set of executable software instructions. In some embodiments, the particular virtual machine configuration may already be in CoW memory ready to be cloned as described in conjunction with FIG. 12. For example, the one or more hosts available to instantiate clones of the particular virtual machine configuration may have each of the particular virtual machine configurations that were created in 1408-18 of FIG. 14 in memory as a shared static virtual machine similar to the shared static particular virtual machine configuration 1218. In some implementations, the system may analyze the set of executable software instructions for characteristics (e.g., syntax, notations, manner of declaring variables, etc.) to identify the language in which the set of executable software instructions is written, and determine which of the particular virtual machine configurations is capable of executing instructions written in the identified language.

In 1510, the system performing the process 1500 may provide the set of executable software instructions to the clone virtual machine and cause the clone virtual machine (also referred to as a "clone" of the particular virtual machine configuration generated by operations similar to those of 1406-14 of FIG. 14) to execute the set of executable software instructions. The operations actually performed by the execution of the set of executable software instructions may be at the discretion of the customer who provided or selected the set of executable software instructions. However, the data storage service may restrict access to the resources and/or data accessed by execution of the set of executable software instructions to only resources and/or data that the customer is authorized to access. In some implementations, execution of the set of executable software instructions may only access resources and/or data local to the host upon which the clone virtual machine is running. In this manner, the data storage service may allow the customer to create and execute customized software code on the customer's data while protecting other customers' data from being accessed by the customized software code.

In 1512, the system performing the process 1500 may determine whether execution of the set of executable instructions has completed (e.g., the task that it is designed to perform is complete). The system may make the determination by any of a variety of ways. For example, the execution may request that the system send a result of the execution to a computer system of the customer (e.g., the customer virtual machine 1008 of FIG. 10). As another example, the executing program may exit. As still another example, the execution may send a notification to the system that it has completed its task. If the system determines that execution has completed, the system may proceed to 1516 to provide the results of execution. If not, the system may proceed to 1514.

In 1514, the system performing the process 1500 may determine whether the execution of the set of executable software instructions has timed out without completing its task. For example, the computing resource service provider may set a time limit on how long a given set of executable software instructions is permitted to run without completing (e.g., 5 minutes, 50 minutes, 1 week, etc.). The time limit may be designed to prevent executable code that has stopped, found itself in an infinite loop, or otherwise failed to properly complete its task from running indefinitely. If the execution has timed out, the system may proceed to 1516. If not, the system may return to 1512 to continue to check whether the execution has completed.

In 1516, the system performing the process 1500 may provide a result of the execution of the set of executable software instructions to a computer system of the customer (e.g., the customer virtual machine 1008 of FIG. 10). If the execution resulted in a timeout (e.g., execution exceeded a time limit), the result returned may be a timeout result (e.g., notification that the execution timed out). Depending on the set of executable software instructions, the result may be customer data retrieved from the data store of host machine of the data storage service; in some cases, the data may or may not have been filtered, redacted, or otherwise modified by the execution. For example, the data may have been scrubbed to remove any sensitive personal or identifying information, such as credit card numbers, social security numbers, home addresses, or the like. Likewise, depending on the set of executable instructions, the result may simply be an indication of whether the execution was successful or not, whether any errors occurred during execution, and/or the duration of the execution. In various embodiments, the result may be provided to an entity in addition to or alternative to the customer, such as to the computing resource service provider or to a third party entity. In still other embodiments, the operations of 1516 may be omitted, as the task may be to perform an operation (e.g., modify data) without providing a result, or may be to provide a result only in the event of a failure (or only provide a result if the task succeeded, with the lack of a result being an indication of failure to successfully perform the task).

In 1517, the system performing the process 1517 may determine whether another request to execute the customer code (or different customer code) has been received. If so, the system may return to 1510 to cause the running clone to execute the customer code in accordance with the request. If not, the system may proceed to 1518.

In 1518, the system performing the process 1500 may terminate the clone virtual machine. Terminating the clone virtual machine may include wiping/erasing (e.g., overwriting with zeroes or other value) any memory previously allocated/provisioned to the clone virtual machine and deallocating allocated resources (e.g., returning memory, processing capability, and/or storage space previously allocated to the clone virtual machine) back to the host system. In some embodiments, the running clone may not be terminated but may be paused or left running until another request to execute customer code is received. Note that one or more of the operations performed in 1502-18 may be performed in various orders and combinations, including in parallel. For example, in some embodiments, the operations of 1502 may be combined such that the customer code is received in conjunction with the request to execute the customer code.

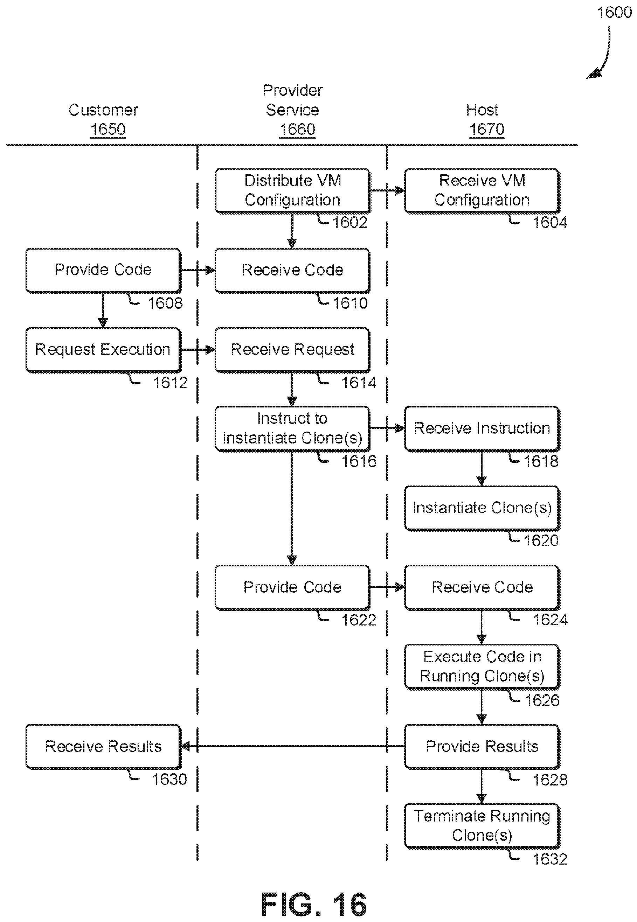

FIG. 16 is a swim diagram illustrating an example of a process 1600 for executing software code in accordance with various embodiments. Some or all of the process 1600 (or any other processes described, or variations and/or combinations of those processes) may be performed under the control of computer systems configured with executable instructions and/or other data, and may be implemented as executable instructions executing on processors. The executable instructions and/or other data may be stored on a non-transitory computer-readable storage media (e.g., a computer programs persistently stored on magnetic, optical, or flash media).

For example, some or all of the operations performed by a customer 1650 may be performed by a computing device such as the electronic client device 902 of FIG. 9. Likewise, some or all of the operations performed by a provider service 1660 or a host 1670 may be performed by any suitable system, such as a server in a data center, by various components of the system 900 described in conjunction with FIG. 9, such as the web server 906 or the application server 908, by multiple computing devices in a distributed system of a computing resource service provider, or by any electronic client device such as the electronic client device 902. The process 1600 includes a series of operations wherein the customer 1650 provides software code to the provider service 1660 and requests execution of the software code, and the provider service 1660 in turn causes the software code to be executed in one or more clone virtual machines on the host 1670.

The provider service 1660 may distribute 1602 a particular virtual machine configuration to the host 1670, as described in conjunction with the process 1400 of FIG. 14. The host 1670 may be a host machine similar to the host machine 1014 of FIG. 10 or the host machine 1214 of FIGS. 12. The host 1670 may receive 1604 the particular virtual machine configuration. In some embodiments, the particular virtual machine configuration is received as a Δ from a base virtual machine configuration that the host 1670 already has a copy of. In this manner, in a multi-tenant system of a computing resource service provider, multiple customers of the computing resource service provider may have individual Δs from a common base image stored at the host 1670 using much less storage space and memory than if the host 1670 were storing entire particular virtual machine configuration images for each customer, thereby achieving a benefit of efficient use of storage resources. Furthermore, in embodiments, the base image may only need to be loaded ("pre-warmed") into memory once, and thereafter the host 1670 may load the individual Δs into memory of the host 1670 as needed (e.g., in response to a request), allowing the host 1670 to build the particular virtual machine configurations more quickly than if the host 1670 had to read entire virtual machine configuration images for the particular virtual machine configurations, since the Δs may be much smaller than an entire image.

In some embodiments, the host 1670 may load (also referred to as "pre-warm") the particular virtual machine configuration into copy-on-write memory as a static shared particular virtual machine configuration, such as the shared static particular virtual machine configuration 1218, such that the particular virtual machine configuration may be used to quickly create a plurality of running clones.

The customer 1650 may provide 1608 the software code to the provider service 1660, and the provider service 1660 may receive the software code. The software code may be similar to the customer code 1020 of FIG. 10 or the set of executable software instructions 1220 of FIG. 12. At the same time or at some time later, the customer 1650 may submit 1612 a request to execute the software code provided in 1008. The request may be similar to the request 1012 and may include a set of parameter values similar to the set of parameter values 1212.

In response to receiving 1614 the request, the provider service 1660 may send 1616 a command to the host 1670 to instantiate a number of clone virtual machines as specified by the customer 1650 or as determined by the provider service 1660 to concurrently execute the software code. In response to receiving 1618 the command, the host 1670 may instantiate 1620 the number of clone virtual machines specified with the command. The clone virtual machines may be similar to the running clone virtual machines 1232 of FIG. 12.

The provider service may provide 1622 the software code to the host 1670. As a result of receiving 1624 the software code, the host 1670 may distribute the software code among the clones virtual machines instantiated 1620. The host 1670 may send a command or otherwise cause the clone virtual machines to execute 1626 the software code in accordance with the submitted 1612 request (e.g., according to the set of parameter values 1212). Upon completion of each of the executions of the software code, the host 1670 may provide 1628 the results of the execution to the customer 1650, and the customer 1650 may receive 1630 the results provided. In some implementations, the host 1670 provides 1628 multiple results (e.g., as each of the clone virtual machines completes execution, provides 1628 a result for that clone virtual machine). In other implementations, the host 1670 waits until all of the clone virtual machines instantiated 1620 have completed, and provides 1628 the results as a batch. In some implementations, the host 1670 provides 1628 the results to the provider service 1660, which then provides the results to the customer 1650 rather than the host 1670 providing 1628 the results to the customer 1650 directly.

The tasks of the clone virtual machines now having been completed, the host 1670 may deprovision the clone virtual machines by terminating the clone virtual machines and deallocating whatever resources (e.g., memory, storage, processor shares, etc.) were allocated/provisioned to the clone virtual machines. Deprovisioning the clone virtual machines may allow the resources that were allocated/provisioned to the clone virtual machines to be made available to be allocated/provisioned to other processes or to other clone virtual machines.

Note that one or more of the operations performed in 1602-32 may be performed in various orders and combinations, including in parallel. For example, the provider service 1660 may provide 1622 the software code to the host 1670 at any time after receiving 1610 the software code and prior to the host 1670 executing 1626 the software code. As another example, the operations by the customer 1650 of providing 1608 the software code and submitting 1612 the request for execution may be performed in a single operation (e.g., within a single request), and, consequently, the provider service 1660 may simultaneously receive 1610 the software code and receive 1614 the request. Likewise, the provider service 1660 may instruct 1616 the host 1670 to instantiate 1620 the clone virtual machines and provide 1622 the software code in a single operation, whereupon the host 1670 may receive 1624 the software code prior to instantiating 1620 the clone virtual machines. Note also that in various embodiments, operations performed between the customer 1650, the provider service 1660, and the host 1670 may include more, fewer, or different operations that depicted in the example 1600. For example, in some embodiments the host 1670 may not provide 1628 the results to the customer 1650, but may instead provide 1628 the results to the provider service 1660 or to a third party (not depicted). Additionally or alternatively, in some examples, the host 1670 may not include the operation of terminating 1632 the running clones, but may instead pause the running clones or allow the running clones to continue running.

Note that, in the context of describing disclosed embodiments, unless otherwise specified, use of expressions regarding executable instructions (also referred to as code, applications, agents, etc.) performing operations that "instructions" do not ordinarily perform unaided (e.g., transmission of data, calculations, etc.) denote that the instructions are being executed by a machine, thereby causing the machine to perform the specified operations.

As one skilled in the art will appreciate in light of this disclosure, certain embodiments may be capable of achieving certain advantages, including some or all of the following: (1) Techniques described and suggested in the present disclosure improve the field of computing, especially the field of cloud data storage and retrieval, by enabling data storage service customers to quickly execute customized customer code on remote hosts to retrieve and manipulate data stored at the remote host with a minimal amount of fleet provisioning, thereby improving the efficiency of data operations and bandwidth usage by performing operations local to the data and avoiding the transmission of the entirety of the data across a network connection. (2) Additionally, techniques described and suggested in the present disclosure improve the efficiency of multi-tenant computer systems by instantiating concurrent virtual machine clones that share a particular virtual machine configuration copy-on-write memory, thereby enabling virtual machine clones to be instantiated quickly and in parallel with reduced memory consumption. (3) Further, techniques described and suggested in the present disclosure improve the efficiency of multi-tenant computer systems by allowing large numbers of virtual machine images to be stored with a reduced footprint (e.g., as differences ["deltas"] from a base virtual machine image), whereby those images can be instantiated rapidly from a paused state to execute software code for individual customers without having to provision resources separately for the individual customers. (4) Moreover, techniques described and suggested in the present disclosure are necessarily rooted in computer technology in order to overcome problems specifically arising with preventing unauthorized access to data of a customer of a computing resource service provider by ensuring that the concurrently executing clone virtual machines are only able to access data of the associated customer.

The specification and drawings are, accordingly, to be regarded in an illustrative rather than a restrictive sense.

Thus, while the disclosed techniques are susceptible to various modifications and alternative constructions, certain illustrated embodiments thereof are shown in the drawings and have been described above in detail.

The use of the terms "a," "an," and "the" and similar referents in the context of describing the disclosed embodiments (especially in the context of the following claims) are to be construed to cover both the singular and the plural, unless otherwise indicated or clearly contradicted by context. Similarly, use of the term "or" is to be construed to mean "and/or" unless contradicted explicitly or by context. The terms "comprising," "having," "including," and "containing" are to be construed as open-ended terms (i.e., meaning "including, but not limited to,") unless otherwise noted. The term "connected," where unmodified and referring to physical connections, is to be construed as partly or wholly contained within, attached to, or joined together, even if there is something intervening. Recitation of ranges of values are merely intended to serve as a shorthand method of referring individually to each separate value falling within the range, unless otherwise indicated and each separate value is incorporated into the specification as if it were individually recited. The use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and the corresponding set may be equal. The use of the phrase "based on," unless otherwise explicitly stated or clear from context, means "based at least in part on" and is not limited to "based solely on."

Conjunctive language, such as phrases of the form "at least one of A, B, and C," or "at least one of A, B and C," (i.e., the same phrase with or without the Oxford comma) unless specifically stated or otherwise clearly contradicted by context, is otherwise understood with the context as used in general to present that an item, term, etc., may be either A or B or C, any nonempty subset of the set of A and B and C, or any set not contradicted by context or otherwise excluded that contains at least one A, at least one B, or at least one C. For instance, in the illustrative example of a set having three members, the conjunctive phrases "at least one of A, B, and C" and "at least one of A, B and C" refer to any of the following sets: {A}, {B}, {C}, {A, B}, {A, C}, {B, C}, {A, B, C}, and, if not contradicted explicitly or by context, any set having {A}, {B}, and/or {C} as a subset (e.g., sets with multiple "A"). Thus, such conjunctive language is not generally intended to imply that certain embodiments require at least one of A, at least one of B and at least one of C each to be present. Similarly, phrases such as "at least one of A, B, or C" and "at least one of A, B or C" refer to the same as "at least one of A, B, and C" and "at least one of A, B and C" refer to any of the following sets: {A}, {B}, {C}, {A, B}, {A, C}, {B, C}, {A, B, C}, unless differing meaning is explicitly stated or clear from context. In addition, unless otherwise noted or contradicted by context, the term "plurality" indicates a state of being plural (e.g., "a plurality of items" indicates multiple items). The number of items in a plurality is at least two, but can be more when so indicated either explicitly or by context.

Operations of processes described can be performed in any suitable order unless otherwise indicated or otherwise clearly contradicted by context. In embodiment, a process such as those processes described (or variations and/or combinations thereof) is performed under the control of one or more computer systems configured with executable instructions and is implemented as code (e.g., executable instructions, one or more computer programs or one or more applications) executing collectively on one or more processors, by hardware or combinations thereof. In an embodiment, the code is stored on a computer-readable storage medium, for example, in the form of a computer program comprising a plurality of instructions executable by one or more processors. In an embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In an embodiment, code (e.g., executable code or source code) is stored on set of one or more non-transitory computer-readable storage media having stored thereon executable instructions that, when executed (i.e., as a result of being executed) by one or more processors of a computer system, cause the computer system to perform operations described herein. The set of non-transitory computer-readable storage media, in an embodiment, comprises multiple non-transitory computer-readable storage media and one or more of individual non-transitory storage media of the multiple non-transitory computer-readable storage media lack all of the code while the multiple non-transitory computer-readable storage media collectively store all of the code. In an embodiment, the executable instructions are executed such that different instructions are executed by different processors for example, a non-transitory computer-readable storage medium stores instructions and a main CPU executes some of the instructions while a graphics processor unit executes other of the instructions. In an embodiment, different components of a computer system have separate processors and different processors execute different subsets of the instructions.

Accordingly, in an embodiment, computer systems are configured to implement one or more services that singly or collectively perform operations of processes described herein and such computer systems are configured with applicable hardware and/or software that enable the performance of the operations. Further, a computer system that implements an embodiment of the present disclosure is a single device and, in another embodiment, is a distributed computer system comprising multiple devices that operate differently such that the distributed computer system performs the operations described and such that a single device does not perform all operations.

The use of any examples, or exemplary language (e.g., "such as") provided, is intended merely to better illuminate embodiments of the invention. No language in the specification should be construed as indicating any non-claimed element as essential to the practice of the invention.

Embodiments of this disclosure are described, including the best mode known to the inventors for carrying out the invention. Variations of those embodiments may become apparent to those of ordinary skill in the art upon reading the foregoing description. The inventors expect skilled artisans to employ such variations as appropriate and the inventors intend for embodiments of the present disclosure to be practiced otherwise than as specifically described.

## Claims

1. A system, comprising:
one or more processors; and
memory that stores computer-executable instructions that, as a result of being executed, cause the one or more processors to:
in response to receipt of a workflow request that indicates software code to be executed, instantiate a first instance of a virtual machine to execute the software code to perform a first portion of a workflow;
determine that additional information is to be obtained from an entity;
store a snapshot that corresponds to a state of the virtual machine;
submit, to the entity, an operation request for the additional information and a handle to the snapshot;
terminate the first instance and free up the resources allocated to the first instance;
receive, from the entity, a resume workflow request that includes:
the handle; and
a response to the operation request to the entity;
using the handle, obtain the snapshot;
instantiate, from the snapshot, a second instance of a virtual machine to perform a second portion of the workflow using the response to the operation request;
receive, from an additional instance of a virtual machine that executes a final portion of the workflow, a workflow result; and
provide the workflow result in response to the workflow request.

2. The system of claim 1, wherein the entity is a user interface executing on a client device of a user.

3. The system of claim 1, wherein the additional instance that executes the final portion of the workflow further determines the workflow result based on the response to the operation request to the entity.

4. The system of claim 1, wherein the workflow request further includes the software code to be executed.

5. The system of claim 1, wherein the computer-executable instructions further include instructions that cause the processors to:
during performance of the second portion of the workflow, determine that second additional information is to be obtained from another entity;
store another snapshot that corresponds to another state of the virtual machine;
submit, to the other entity, another operation request for the second additional information and another handle to the other snapshot;
terminate the second instance and free up the resources allocated to the second instance;
receive, from the other entity, another resume workflow request that includes:
the other handle; and
a response to the other operation request; and
using the other handle, obtain the other snapshot;
instantiate, from the other snapshot, a third instance of a virtual machine to perform a third portion of the workflow, using the response to the other operation request.

6. The system of claim 1, wherein the computer-executable instructions further include instructions that cause the system to generate the snapshot.

7. The system of claim 6, wherein the computer-executable instructions further include instructions that cause the system to terminate the additional instance.

8. The system of claim 6, wherein the entity is a service of a computing resource service provider that maintains the system.

9. A computer-implemented method, comprising:
receiving a first request from a requestor to perform a workflow, wherein the workflow request further indicates the software code to be executed;
instantiating a first virtual machine and causing the first virtual machine to execute software code to perform a first portion of the workflow;
determining that first information is to be obtained from an entity;
storing a first snapshot of a state of the first virtual machine; and
submitting, to the entity, a first operation request for the first information and a first handle to the first snapshot;
terminating the first virtual machine and freeing up the resources allocated to the first virtual machine;
receiving a second request from the entity that includes the first handle and the first information;
using the first handle, obtaining the first snapshot;
instantiating, from the first snapshot, a second virtual machine to execute the software code to resume performance of the workflow using the first information;
as a result of receipt of a third request that includes a second handle and second information, instantiating, using a second snapshot associated with the second handle, a third virtual machine to resume performance of the workflow using the second information, wherein the second snapshot is a state of the second virtual machine;
receiving a workflow result from the third virtual machine; and
providing, in response to the first request, the workflow result to the requestor.

10. The computer-implemented method of claim 9, wherein the second virtual machine is instantiated on a different physical host from the first virtual machine.

11. The computer-implemented method of claim 9, wherein:
the first snapshot represents a set of differences between the state of the first virtual machine and a base configuration; and
the second snapshot represents a set of differences between the state of the first virtual machine and the state of the second virtual machine.

12. The computer-implemented method of claim 9, wherein the computer system is a server of an event-driven, serverless computing platform provided as a service by a computing resource service provider.

13. The computer-implemented method of claim 9, wherein the software code is received with the first request.

## Patentansprüche

1. Ein System, das Folgendes beinhaltet:
einen oder mehrere Prozessoren; und
einen Speicher, der rechnerausführbare Anweisungen speichert, die als ein Ergebnis ihrer Ausführung den einen oder die mehreren Prozessoren zu Folgendem veranlassen:
als Antwort auf den Empfang einer Workflow-Anforderung, die auszuführenden Softwarecode angibt, Instanziieren einer ersten Instanz einer virtuellen Maschine zum Ausführen des Softwarecodes, um einen ersten Abschnitt eines Workflows durchzuführen;
Bestimmen, dass zusätzliche Informationen von einer Entität zu erhalten sind;
Speichern eines Snapshots, der einem Zustand der virtuellen Maschine entspricht;
Übermitteln, an die Entität, einer Operationsanforderung für die zusätzlichen Informationen und eines Handles auf den Snapshot;
Beenden der ersten Instanz und Freigeben der der ersten Instanz zugewiesenen Ressourcen;
Empfangen, von der Entität, einer Workflow-Fortsetzungsanforderung, die Folgendes umfasst:
das Handle; und
eine Antwort auf die Operationsanforderung an die Entität;
unter Verwendung des Handles, Erhalten des Snapshots;
Instanziieren, aus dem Snapshot, einer zweiten Instanz einer virtuellen Maschine zum Durchführen eines zweiten Abschnitts des Workflows unter Verwendung der Antwort auf die Operationsanforderung;
Empfangen, von einer zusätzlichen Instanz einer virtuellen Maschine, die einen letzten Abschnitt des Workflows ausführt, eines Workflow-Ergebnisses; und
Bereitstellen des Workflow-Ergebnisses als Antwort auf die Workflow-Anforderung.

2. System gemäß Anspruch 1, wobei die Entität eine Benutzerschnittstelle ist, die auf einer Client-Vorrichtung eines Benutzers ausgeführt wird.

3. System gemäß Anspruch 1, wobei die zusätzliche Instanz, die den letzten Abschnitt des Workflows ausführt, ferner das Workflow-Ergebnis basierend auf der Antwort auf die Operationsanforderung an die Entität bestimmt.

4. System gemäß Anspruch 1, wobei die Workflow-Anforderung ferner den auszuführenden Softwarecode umfasst.

5. System gemäß Anspruch 1, wobei die rechnerausführbaren Anweisungen ferner Anweisungen umfassen, die die Prozessoren zu Folgendem veranlassen:
während der Durchführung des zweiten Abschnitts des Workflows, Bestimmen, dass zweite zusätzliche Informationen von einer anderen Entität zu erhalten sind;
Speichern eines weiteren Snapshots, der einem weiteren Zustand der virtuellen Maschine entspricht;
Übermitteln, an die andere Entität, einer weiteren Operationsanforderung für die zweiten zusätzlichen Informationen und eines weiteren Handles auf den weiteren Snapshot;
Beenden der zweiten Instanz und Freigeben der der zweiten Instanz zugewiesenen Ressourcen;
Empfangen, von der anderen Entität, einer weiteren Workflow-Fortsetzungsanforderung, die Folgendes umfasst:
das weitere Handle; und
eine Antwort auf die weitere Operationsanforderung; und
unter Verwendung des weiteren Handles, Erhalten des weiteren Snapshots;
Instanziieren, aus dem weiteren Snapshot, einer dritten Instanz einer virtuellen Maschine zum Durchführen eines dritten Abschnitts des Workflows unter Verwendung der Antwort auf die weitere Operationsanforderung.

6. System gemäß Anspruch 1, wobei die rechnerausführbaren Anweisungen ferner Anweisungen umfassen, die das System veranlassen, den Snapshot zu erzeugen.

7. System gemäß Anspruch 6, wobei die rechnerausführbaren Anweisungen ferner Anweisungen umfassen, die das System veranlassen, die zusätzliche Instanz zu beenden.

8. System gemäß Anspruch 6, wobei die Entität ein Dienst eines Rechenressourcen-Dienstanbieters ist, der das System unterhält.

9. Ein rechnerimplementiertes Verfahren, das Folgendes beinhaltet:
Empfangen einer ersten Anforderung von einem Anforderer zum Durchführen eines Workflows, wobei die Workflow-Anforderung ferner den auszuführenden Softwarecode angibt;
Instanziieren einer ersten virtuellen Maschine und Veranlassen der ersten virtuellen Maschine zum Ausführen von Softwarecode zum Durchführen eines ersten Abschnitts des Workflows;
Bestimmen, dass erste Informationen von einer Entität zu erhalten sind;
Speichern eines ersten Snapshots eines Zustands der ersten virtuellen Maschine; und
Übermitteln, an die Entität, einer ersten Operationsanforderung für die ersten Informationen und eines ersten Handles auf den ersten Snapshot;
Beenden der ersten virtuellen Maschine und Freigeben der der ersten virtuellen Maschine zugewiesenen Ressourcen;
Empfangen einer zweiten Anforderung von der Entität, die das erste Handle und die ersten Informationen umfasst;
unter Verwendung des ersten Handles, Erhalten des ersten Snapshots;
Instanziieren, aus dem ersten Snapshot, einer zweiten virtuellen Maschine zum Ausführen des Softwarecodes, um die Durchführung des Workflows unter Verwendung der ersten Informationen fortzusetzen;
als Ergebnis des Empfangs einer dritten Anforderung, die ein zweites Handle und
zweite Informationen umfasst, Instanziieren, unter Verwendung eines zweiten Snapshots, der dem zweiten Handle zugeordnet ist, einer dritten virtuellen Maschine zum Fortsetzen der Durchführung des Workflows unter Verwendung der zweiten Informationen, wobei der zweite Snapshot ein Zustand der zweiten virtuellen Maschine ist;
Empfangen eines Workflow-Ergebnisses von der dritten virtuellen Maschine; und
Bereitstellen, als Antwort auf die erste Anforderung, des Workflow-Ergebnisses an den Anforderer.

10. Rechnerimplementiertes Verfahren gemäß Anspruch 9, wobei die zweite virtuelle Maschine auf einem physischen Host instanziiert wird, der sich von dem der ersten virtuellen Maschine unterscheidet.

11. Rechnerimplementiertes Verfahren gemäß Anspruch 9, wobei:
der erste Snapshot einen Satz Unterschiede zwischen dem Zustand der ersten virtuellen Maschine und einer Basiskonfiguration darstellt; und
der zweite Snapshot einen Satz Unterschiede zwischen dem Zustand der ersten virtuellen Maschine und dem Zustand der zweiten virtuellen Maschine darstellt.

12. Rechnerimplementiertes Verfahren gemäß Anspruch 9, wobei das Rechnersystem ein Server einer ereignisgesteuerten, serverlosen Rechenplattform ist, die als ein Dienst durch einen Rechenressourcen-Dienstanbieter bereitgestellt wird.

13. Rechnerimplementiertes Verfahren gemäß Anspruch 9, wobei der Softwarecode mit der ersten Anforderung empfangen wird.

## Revendications

1. Un système, comprenant :
un ou plusieurs processeurs ; et
une mémoire qui stocke des instructions exécutables par ordinateur qui, par suite de leur exécution, amènent les un ou plusieurs processeurs à :
en réponse à la réception d'une requête de flux de travail qui indique un code logiciel à exécuter, instancier une première instance d'une machine virtuelle pour exécuter le code logiciel afin d'effectuer une première partie d'un flux de travail ;
déterminer que des informations additionnelles doivent être obtenues auprès d'une entité ;
stocker un instantané qui correspond à un état de la machine virtuelle ;
soumettre, à l'entité, une requête d'opération pour les informations additionnelles et un indicateur vers l'instantané ;
mettre fin à la première instance et libérer les ressources allouées à la première instance ;
recevoir, à partir de l'entité, une requête de reprise de flux de travail qui inclut :
l'indicateur ; et
une réponse à la requête d'opération à l'entité ;
à l'aide de l'indicateur, obtenir l'instantané ;
instancier, à partir de l'instantané, une deuxième instance d'une machine virtuelle pour effectuer une deuxième partie du flux de travail à l'aide de la réponse à la requête d'opération ;
recevoir, à partir d'une instance additionnelle d'une machine virtuelle qui exécute une partie finale du flux de travail, un résultat de flux de travail ; et
fournir le résultat de flux de travail en réponse à la requête de flux de travail.

2. Le système de la revendication 1, dans lequel l'entité est une interface utilisateur en cours d'exécution sur un dispositif client d'un utilisateur.

3. Le système de la revendication 1, dans lequel l'instance additionnelle qui exécute la partie finale du flux de travail détermine en outre le résultat de flux de travail sur la base de la réponse à la requête d'opération à l'entité.

4. Le système de la revendication 1, dans lequel la requête de flux de travail inclut en outre le code logiciel devant être exécuté.

5. Le système de la revendication 1, dans lequel les instructions exécutables par ordinateur incluent en outre des instructions qui amènent les processeurs à :
pendant la réalisation de la deuxième partie du flux de travail, déterminer que des deuxièmes informations additionnelles doivent être obtenues auprès d'une autre entité ;
stocker un autre instantané qui correspond à un autre état de la machine virtuelle ;
soumettre, à l'autre entité, une autre requête d'opération pour les deuxièmes informations additionnelles et un autre indicateur vers l'autre instantané ;
mettre fin à la deuxième instance et libérer les ressources allouées à la deuxième instance ;
recevoir, à partir de l'autre entité, une autre requête de reprise de flux de travail qui inclut :
l'autre indicateur ; et
une réponse à l'autre requête d'opération ; et
à l'aide de l'autre indicateur, obtenir l'autre instantané ;
instancier, à partir de l'autre instantané, une troisième instance d'une machine virtuelle pour effectuer une troisième partie du flux de travail, à l'aide de la réponse à l'autre requête d'opération.

6. Le système de la revendication 1, dans lequel les instructions exécutables par ordinateur incluent en outre des instructions qui amènent le système à générer l'instantané.

7. Le système de la revendication 6, dans lequel les instructions exécutables par ordinateur incluent en outre des instructions qui amènent le système à mettre fin à l'instance additionnelle.

8. Le système de la revendication 6, dans lequel l'entité est un service d'un fournisseur de services de ressources informatiques qui assure la maintenance du système.

9. Un procédé mis en œuvre par ordinateur, comprenant :
le fait de recevoir une première requête à partir d'un demandeur pour effectuer un flux de travail, dans lequel la requête de flux de travail indique en outre le code logiciel devant être exécuté ;
le fait d'instancier une première machine virtuelle et le fait d'amener la première machine virtuelle à exécuter un code logiciel pour effectuer une première partie du flux de travail ;
le fait de déterminer que des premières informations doivent être obtenues auprès d'une entité ;
le fait de stocker un premier instantané d'un état de la première machine virtuelle ; et
le fait de soumettre, à l'entité, une première requête d'opération pour les premières informations et un premier indicateur vers le premier instantané ;
le fait de mettre fin à la première machine virtuelle et le fait de libérer les ressources allouées à la première machine virtuelle ;
le fait de recevoir, à partir de l'entité, une deuxième requête qui inclut le premier indicateur et les premières informations ;
à l'aide du premier indicateur, le fait d'obtenir le premier instantané ;
le fait d'instancier, à partir du premier instantané, une deuxième machine virtuelle pour exécuter le code logiciel afin de reprendre la réalisation du flux de travail à l'aide des premières informations ;
par suite de la réception d'une troisième requête qui inclut un deuxième indicateur et des deuxièmes informations, le fait d'instancier, à l'aide d'un deuxième instantané associé au deuxième indicateur, une troisième machine virtuelle pour reprendre la réalisation du flux de travail à l'aide des deuxièmes informations, dans lequel le deuxième instantané est un état de la deuxième machine virtuelle ;
le fait de recevoir un résultat de flux de travail à partir de la troisième machine virtuelle ; et
le fait de fournir, en réponse à la première requête, le résultat de flux de travail au demandeur.

10. Le procédé mis en œuvre par ordinateur de la revendication 9, dans lequel la deuxième machine virtuelle est instanciée sur un hôte physique différent de la première machine virtuelle.

11. Le procédé mis en œuvre par ordinateur de la revendication 9, dans lequel :
le premier instantané représente un ensemble de différences entre l'état de la première machine virtuelle et une configuration de base ; et
le deuxième instantané représente un ensemble de différences entre l'état de la première machine virtuelle et l'état de la deuxième machine virtuelle.

12. Le procédé mis en œuvre par ordinateur de la revendication 9, dans lequel le système informatique est un serveur d'une plateforme informatique sans serveur orientée événements fournie en tant que service par un fournisseur de services de ressources informatiques.

13. Le procédé mis en œuvre par ordinateur de la revendication 9, dans lequel le code logiciel est reçu avec la première requête.
